# FASCICULE DE BREVET EUROPEEN

(11) **EP 3 051 121 B1**
(45) Date de publication et mention de la délivrance du brevet: **03.01.2018**
(21) Numéro de dépôt: 16157178.1
(22) Date de dépôt: 26.09.2011
(51) Int. Cl.: F03B 13/06, F03D 9/14

(54) **PROCÉDÉ ET INSTALLATION DE PRODUCTION D'ÉNERGIE ÉLECTRIQUE D'APPOINT**
VERFAHREN UND ANLAGE ZUR ERZEUGUNG VON RESERVELEISTUNG
METHOD AND FACILITY FOR PRODUCING BACKUP ELECTRICAL POWER

(30) Priorité: 27.09.2010 FR 1057756
(43) Date de publication de la demande: 03.08.2016
(62) Demande divisionnaire de: 11773766.8
(73) Titulaire: Nature And People First, 75006 Paris (FR)
(72) Inventeur: PAYRE, DENIS, 75006 PARIS (FR); PISTERMAN, PIERRE, 75017 PARIS (FR); PISTERMAN, PATRICE, 54000 NANCY (FR)
(74) Mandataire: David, Alain

(56) Documents cités:
- DE-A1- 2 928 476
- GB-A- 190 704 727
- JP-A- H11 222 836
- US-A1- 2005 034 452
- US-A1- 2008 253 837
- US-A1- 2009 058 092
- US-A1- 2009 121 481

## Description

### Domaine de l'invention

L'invention a pour objet un procédé et une installation de production d'énergie électrique d'appoint pour un réseau de distribution de courant électrique.

### Art antérieur

On connaît déjà, par exemple par le document US 4 443 707 un système de génération d'énergie hydroélectrique qui permet de transformer l'énergie potentielle d'une réserve d'eau en énergie cinétique d'entraînement d'une turbine couplée à un générateur d'électricité. Dans ce cas, de l'eau stockée dans un réservoir situé à un niveau haut est libérée dans une conduite forcée vers la turbine de production d'électricité lorsqu'un appoint de courant électrique est nécessaire sur le réseau pour faire face à une pointe de consommation de courant.

On sait en effet que la consommation d'électricité est irrégulière et qu'il se produit des pics de demande, par exemple en fin de journée, ou par temps froid lorsque la demande en chauffage électrique augmente ou encore à l'inverse par temps de canicule lorsque de nombreuses installations de climatisation sont en service. L'énergie hydroélectrique produite durant les périodes de pointe peut être envoyée sur le réseau électrique pour faire face à l'accroissement de la demande, sachant que l'énergie électrique produite par d'autres moyens, comme par exemple dans une centrale nucléaire, est difficilement modulable. De même l'électricité produite grâce aux énergies douces et renouvelables (solaire, éolien) l'est de façon très aléatoire en fonction des conditions météorologiques.

Selon le document US 4 443 707 en dehors des périodes de pointe, de l'énergie électrique du réseau de distribution principal est utilisée pour alimenter une pompe de relevage qui permet de renvoyer vers le réservoir situé à un niveau haut de l'eau récupérée dans un réservoir situé à un niveau bas de façon à reconstituer de l'énergie potentielle pour la période de pointe suivante. Les réservoirs haut et bas sont alors généralement constitués par des bassins naturels tels que des lacs ou des mines.

On connaît encore par exemple par le document US 6 861 766 une installation de génération d'électricité d'appoint par centrale hydraulique d'accumulation par pompage, qui comprend deux réservoirs d'eau artificiels supérieur et inférieur associés à une conduite forcée et à une machine hydroélectrique réversible pour fournir à un réseau de distribution d'énergie électrique de l'électricité d'appoint en utilisant l'énergie potentielle de l'eau stockée dans le réservoir supérieur, tandis que l'énergie nécessaire pour entraîner la machine hydroélectrique fonctionnant en pompe est obtenue à partir d'une éolienne et n'est donc pas prélevée à partir du réseau, ce qui réduit la consommation d'électricité faisant appel à des combustibles fossiles ou d'origine nucléaire. Le coût d'une telle installation dédiée à la production d'énergie électrique d'appoint est élevé compte tenu notamment de la nécessité de réaliser une structure suffisamment solide pour supporter le réservoir haut.

Le document US 2009/0058092 A1 décrit également la mise en oeuvre de réservoirs supérieurs placés dans les étages élevés d'immeubles de grande hauteur pour la production d'électricité d'appoint par centrale hydraulique d'accumulation par pompage. Toutefois, compte tenu des contraintes de construction, et de risques sismiques, la taille des réservoirs supérieurs est limitée et l'énergie produite à partir de l'énergie potentielle de l'eau placée dans ces réservoirs est en pratique insuffisante pour permettre de renvoyer de l'énergie électrique significative dans un réseau en période de pointe de consommation. En particulier une telle installation ne permet pas de mettre en oeuvre des puissances importantes supérieures à environ 100kW.

On connaît encore par le document FR 2 789 126 un dispositif de récupération d'énergie hydraulique pour des constructions de type maison individuelle ou immeuble comprenant un premier réservoir supérieur installé en hauteur dans les combles ou sur le toit de la construction et un second réservoir inférieur installé dans la partie inférieure de la construction, dans la cave ou enterrée à proximité de la construction.

Ce dispositif peut être associé à des dispositifs de récupération d'énergie solaire, éolienne ou géothermique qui en particulier peuvent servir à l'entraînement d'une pompe de transfert de l'eau entre le réservoir inférieur et le réservoir supérieur tandis qu'une turbine associée à une génératrice est actionnée de façon sélective par le flux de liquide circulant dans une conduite descendante entre le réservoir supérieur et le réservoir inférieur.

L'énergie électrique produite est destinée à alimenter la construction équipée de ce dispositif par exemple pour alimenter un chauffage électrique d'appoint. Il n'est pas prévu de renvoyer une partie au moins de l'énergie électrique produite vers un réseau public de distribution d'électricité et le coût de l'investissement pour l'installation du dispositif de récupération d'énergie reste élevé notamment du fait qu'il est nécessaire d'aménager deux réservoirs artificiels par bâtiment. Par ailleurs, le stockage de quantités importantes d'eau en hauteur est contraignante avec des surcoûts, car les normes habituelles de charge maximum sur une structure de bâtiment d'habitation, de l'ordre de 350 kg par m², ne permettent pas de disposer d'une masse d'eau suffisante pour obtenir un effet significatif. En effet, si l'on considère par exemple une maison particulière de 100 m², on ne pourrait pas disposer d'un réservoir haut de plus de 35 m³, ce qui ne permet pas d'avoir une création d'énergie potentielle suffisante. La création d'une structure dédiée suffisamment solide pour résister à la charge requise et permettre de stocker en hauteur au-dessus du sol, par exemple à 10 mètres de hauteur, un volume d'eau significatif, par exemple de l'ordre de 1200 m³, revient à construire un château d'eau avec des contraintes de résistance des matériaux très importantes et n'est donc pas économiquement intéressante. Ce procédé implique une exploitation complexe obligeant au suivi des niveaux de multiples réservoirs hauts et bas à la fois et, compte tenu des divers risques liés à la sismologie ou au terrorisme, implique une mise en oeuvre très délicate. Au total, ce procédé, de par les contraintes qu'il impose et les coûts qu'il implique ne permet pas une exploitation à grande échelle.

Le document DE 2928476 A1 décrit une installation de production d'énergie électrique à partir de la collecte d'eaux usées dans une maison d'habitation individuelle. Un réservoir de collecte est placé à la base de la maison et relié par une conduite à une roue hydraulique puis à un réservoir situé plus bas et permettant soit une évacuation vers un égout, soit un recyclage à l'aide d'une pompe vers le réservoir de collecte. Une telle installation associée à une maison individuelle nécessite une excavation spécifique pour le réservoir inférieur et ne peut générer que des puissances de l'ordre de quelques dizaines de watts, et par suite ne peut fournir quotidiennement qu'une énergie d'appoint en quantité dérisoire, inférieure à 1 kWh.

Le document EP 0 599 691 décrit une installation de production d'énergie électrique constituée par une centrale hydraulique d'accumulation par pompage utilisant un réservoir haut situé au niveau du sol, et constitué par une étendue d'eau naturelle ou aménagé dans le sous-sol à une première profondeur et un réservoir bas en forme de tunnel situé dans le sous-sol à une profondeur plus importante que celle du premier réservoir. Le coût des travaux d'aménagement des cavités réalisées en sous-sol est très élevé. Ces cavités doivent être situées à des profondeurs importantes et doivent être étayées pour résister à la pression et à l'érosion créées par un flux hydraulique régulier et puissant, ce qui renchérit d'autant le coût de mise en oeuvre de ce procédé.

### Définition et objet de l'invention

La présente invention vise à remédier aux inconvénients précités et à permettre de fournir de façon sélective à des périodes de pointe, c'est-à-dire à des moments de forte demande en énergie électrique, de l'énergie électrique d'appoint en quantité significative à un réseau de distribution de courant électrique, tout en minimisant le coût de réalisation des infrastructures permettant de générer de l'électricité par centrale hydraulique d'accumulation par pompage et en permettant de mettre en oeuvre les installations de production d'énergie électrique d'appoint dans des zones urbanisées au plus près des lieux de consommation de l'énergie électrique.

L'invention vise ainsi à permettre la production d'énergie électrique d'appoint à une échelle industrielle ou semi-industrielle largement supérieure aux capacités de production liées à un habitat individuel, sans pour autant nécessiter des travaux de génie civil spécifiques.

Le procédé selon l'invention vise également à permettre entre autres aux sources d'énergies douces de trouver leur équilibre économique en stockant l'électricité produite lors des périodes de pointes de production et en les restituant lors des périodes de pointe de consommation sans ajouter des investissements considérables incompatibles avec l'équation économique globale que doivent respecter ces installations. La possibilité d'une revente de l'électricité produite aux périodes où la demande est la plus forte et où elle est donc achetée au prix le plus élevé est de nature à améliorer de façon très significative le compte de résultat de ces installations de production d'énergie renouvelable de type solaire ou éolien.

Le procédé et l'installation selon l'invention visent également à permettre d'éviter les surcharges difficiles à gérer et à absorber pour les exploitants de réseaux électriques lorsque des systèmes de production d'énergie solaire ou éolienne se mettent à fonctionner à pleine activité car les conditions météorologiques adéquates sont soudainement réunies : fort ensoleillement ou vents forts. Sans un tel procédé complémentaire, les procédés de production d'énergies renouvelables comme le solaire et l'éolien seront considérablement freinés dans leur développement et ils ne parviendront que difficilement à être compétitifs avec des modes de production d'énergie traditionnels sans des subventions considérables et coûteuses pour les budgets des Etats qui tentent d'encourager l'émergence de ces énergies alternatives.

L'invention vise encore à créer des synergies et améliorer la robustesse, le confort ou le bilan thermique de constructions à usage public, commercial ou privé.

Ces buts sont atteints conformément à l'invention grâce à une installation de production d'énergie électrique d'appoint pour un réseau de distribution de courant électrique selon la revendication 1. Les bâtiments artificiels présentent de façon préférentielle une fonction primaire de logements, de bureaux, de parkings, de commerces, d'entrepôts, d'usines ou d'équipements culturels ou sportifs.

Selon un aspect particulier, qui exploite le fait qu'au moins un réservoir élémentaire est installé dans les fondations de bâtiments artificiels, au moins un réservoir élémentaire qui est intégré de façon enterrée dans les fondations de bâtiments artificiels coopère en outre avec une installation de climatisation ou de réfrigération de tout ou partie desdits bâtiments artificiels ou de bâtiments associés, ladite installation de climatisation ou de réfrigération comprenant au moins un condenseur alimenté par l'eau dudit réservoir élémentaire, un détendeur, un évaporateur alimenté par un fluide caloporteur et un groupe compresseur.

Selon un autre aspect particulier, qui exploite également le fait qu'au moins un réservoir élémentaire est installé dans les fondations de bâtiments artificiels, au moins un réservoir élémentaire qui est intégré de façon enterrée dans les fondations de bâtiments artificiels coopère en outre avec une installation de chauffage de tout ou partie desdits bâtiments artificiels ou de bâtiments associés, ladite installation de chauffage comprenant au moins un condenseur alimenté par de l'eau d'un circuit de chauffage, un détendeur, un évaporateur alimenté par l'eau dudit réservoir élémentaire et un groupe compresseur.

De telles caractéristiques permettent d'opérer une synergie dans les processus de recherche d'économies d'énergie et de régulation de la production d'énergie électrique, en plus de la synergie déjà réalisée par l'intégration d'un réservoir dans des fondations d'un bâtiment.

Selon un mode particulier de réalisation possible, l'un desdits premier et deuxième réservoirs se situe en dehors de bâtiments et constitue une étendue d'eau naturelle ou artificielle au voisinage du niveau du sol.

Ce réservoir situé en dehors d'un bâtiment est ainsi avantageusement constitué par un lac artificiel, un réservoir d'assainissement d'eau, ou une étendue d'eau naturelle telle qu'un lac, un cours d'eau ou la mer.

Selon un mode particulier de réalisation, ledit dénivelé est compris entre 5 et 8 mètres. Dans ce cas, la turbine d'une centrale hydroélectrique peut être située au niveau du deuxième réservoir, mais peut également à titre d'option être située au voisinage du premier réservoir, si cela s'avère avantageux, par exemple pour des questions d'intégration dans l'environnement.

Selon un autre mode particulier de réalisation, ledit dénivelé est supérieur à 8 mètres. Dans ce cas, la centrale hydroélectrique et l'installation de pompage peuvent être situées au voisinage immédiat du deuxième réservoir. Toutefois, la centrale hydroélectrique et l'installation de pompage peuvent également être situées à l'élévation dudit deuxième réservoir, mais de façon délocalisée par rapport à ce deuxième réservoir.

Selon un mode particulier de réalisation, le circuit de commande comprend une unité de couplage de l'installation de pompage audit réseau de distribution pendant des périodes creuses de consommation d'électricité et une unité de couplage de la centrale hydroélectrique audit réseau de distribution pendant des périodes de pointe de consommation d'électricité.

Selon un autre aspect de l'invention, le circuit de commande peut comprendre une unité de couplage de l'installation de pompage à une source d'énergie douce naturelle, telle que l'énergie solaire ou l'énergie éolienne, pendant des périodes creuses de consommation d'électricité et une unité de couplage de la centrale hydroélectrique audit réseau de distribution pendant des périodes de pointe de consommation d'électricité.

Le réservoir d'eau intégré de façon enterrée ou semi-enterrée dans les fondations de bâtiments artificiels peut comprendre plusieurs réservoirs élémentaires disposés dans des bâtiments distincts et reliés entre eux par une conduite d'équilibrage.

Le réservoir d'eau intégré de façon enterrée ou semi-enterrée dans les fondations de bâtiments artificiels peut comprendre au moins un réservoir élémentaire relié en outre à une installation de rafraîchissement naturel, d'arrosage, de lavage ou de lutte contre l'incendie.

Un capteur de niveau de liquide est associé à chaque réservoir élémentaire d'un réservoir intégré de façon enterrée ou semi-enterrée dans les fondations de bâtiments artificiels.

Le réservoir intégré de façon enterrée ou semi-enterrée dans les fondations de bâtiments artificiels peut comprendre un ou plusieurs réservoirs élémentaires présentant chacun de préférence une profondeur enterrée inférieure ou égale à 12m et une portion en superstructure inférieure ou égale à 3m.

Le réservoir intégré de façon enterrée ou semi-enterrée dans les fondations de bâtiments artificiels peut comprendre des fondations profondes rendues solidaires d'un cuvelage définissant un réservoir étanche avec un ensemble de compartiments fermés par un plancher.

A titre d'exemple, le réservoir intégré de façon enterrée ou semi-enterrée dans les fondations de bâtiments artificiels peut présenter une épaisseur de paroi latérale comprise entre 20 et 45 cm et une épaisseur de fond comprise entre 10 et 25 cm.

Selon un aspect de l'invention, l'installation comprend un dispositif de pilotage informatique des vannes commandées associées aux premiers réservoirs, et des centrales hydroélectriques, en fonction des besoins immédiats en énergie électrique d'appoint et du niveau d'eau dans les réservoirs.

L'invention concerne également un procédé de production d'énergie électrique d'appoint pour un réseau de distribution de courant électrique selon la revendication 16. Selon un mode de réalisation possible, on assure le pompage d'eau depuis le deuxième réservoir d'eau et on assure l'alimentation en eau de la centrale hydroélectrique à partir du premier réservoir d'eau au moins partiellement à travers une conduite commune à double sens de circulation de fluide.

Selon un autre mode de réalisation possible, on assure le pompage d'eau depuis ledit deuxième réservoir d'eau à travers une première conduite de mise en communication équipée d'au moins une vanne commandée, et on assure l'alimentation en eau de la centrale hydroélectrique à partir dudit premier réservoir d'eau, à travers au moins une deuxième conduite de mise en communication équipée d'au moins une vanne commandée.

Selon un mode de réalisation avantageux du procédé conforme à l'invention, au moins un réservoir intégré dans des fondations d'un bâtiment constitue en outre une source chaude pour une installation de climatisation ou de réfrigération ou une source froide pour une installation de chauffage de tout ou partie desdits bâtiments artificiels ou de bâtiments associés, ladite installation de climatisation ou de réfrigération et ladite installation de chauffage comprenant chacune au moins une pompe à chaleur.

Selon un mode particulier de réalisation du procédé conforme à l'invention, au moins le deuxième réservoir est situé à la partie inférieure enterrée ou semi-enterrée de bâtiments artificiels dont la construction est rendue nécessaire par une fonction primaire indépendante d'une fonction secondaire de production d'électricité, et l'énergie électrique produite à partir d'une centrale hydroélectrique associée audit deuxième réservoir sert au moins en partie à alimenter localement en énergie électrique un bâtiment artificiel à la partie inférieure duquel est situé ledit deuxième réservoir ou un bâtiment associé situé à proximité immédiate de ce bâtiment artificiel.

### Brève description des dessins

D'autres caractéristiques et avantages de l'invention ressortiront de la description suivante de modes particuliers de réalisation de l'invention, donnés à titre d'exemples, en référence aux dessins annexés, sur lesquels :
- la Figure 1 est une vue schématique d'ensemble de divers modes de réalisation d'une installation de production d'énergie électrique d'appoint pour un réseau de distribution de courant électrique, conformément à l'invention,
- la Figure 2 est une vue schématique d'ensemble en perspective de l'un des modes de réalisation possibles d'une installation de production d'énergie électrique d'appoint pour un réseau de distribution de courant électrique,
- les Figures 3 et 4 sont des vues en élévation de deux exemples d'installations selon l'invention comprenant chacune une pluralité de premiers réservoirs d'eau,
- la Figure 5 est une vue en élévation d'un exemple d'installation selon l'invention comprenant un ensemble pompe-turbine particulier,
- les Figures 6 et 7 sont des vues de détail respectivement en élévation et de dessus de l'ensemble pompe-turbine de la Figure 5,
- la Figure 8 est un schéma frigorifique d'un circuit d'une pompe à chaleur sur eau claire pouvant être incorporée dans une installation selon l'invention,
- la Figure 9 est un schéma frigorifique d'un circuit d'un climatiseur à condensation sur eau claire pouvant être incorporé dans une installation selon l'invention,
- les Figures 10A et 10B sont des vues schématiques en coupe de structures de bâtiments traditionnels,
- les Figures 11A et 11B sont des vues schématiques en coupe d'exemples de structures de bâtiments équipés de réservoirs d'eau selon l'invention,
- la Figure 12 est une vue schématique en perspective montrant un exemple de façade bio-climatique d'un bâtiment équipé d'une installation selon l'invention,
- la Figure 13 est une vue schématique en coupe d'un exemple de structure de bâtiment équipé de réservoirs d'eau selon l'invention et produisant une circulation d'air de rafraîchissement,
- la Figure 14 est une vue schématique en coupe d'un exemple de structure de bâtiment équipé de réservoirs d'eau selon l'invention et comportant un système de plan d'eau de rafraîchissement naturel,
- la Figure 15 est une vue schématique en coupe d'un exemple de structure de bâtiment équipé de réservoirs d'eau selon l'invention et incorporant un système d'alimentation du bâtiment en eau sanitaire,
- la Figure 16 est une vue schématique en coupe d'un exemple de structure de bâtiment équipé de réservoirs d'eau selon l'invention et incorporant un système d'alimentation en eau de bornes d'incendie ou de systèmes de pulvérisation d'eau, et
- la Figure 17 est un schéma-bloc d'un exemple de système de commande d'installations selon l'invention.

### Description détaillée de modes de réalisation préférentiels

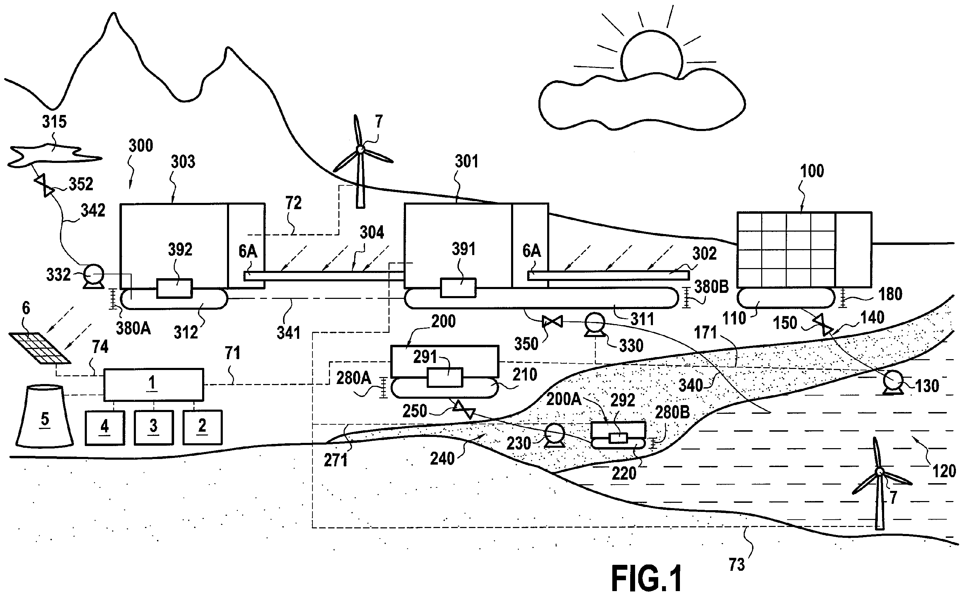

Si l'on se réfère à la figure 1, on voit divers exemples de mise en oeuvre d'une installation de production d'énergie électrique selon l'invention.

Un poste de commande 1 d'un réseau de distribution d'énergie électrique gère la production d'électricité à partir de diverses centrales conventionnelles 2 à 5 de production d'électricité à partir d'énergie fossile (charbon, fuel, gaz) ou d'énergie nucléaire. De telles centrales conventionnelles présentent l'inconvénient de manquer de souplesse dans leur fonctionnement et donc de ne pas pouvoir s'adapter facilement à des variations de la demande et présentent en outre des inconvénients pour l'environnement. Elles reposent enfin sur des énergies fossiles non renouvelables en voie d'épuisement.

Des sources de production d'électricité 6, 7 à partir d'énergies naturelles renouvelables, telles que le vent, le soleil, ou encore la géothermie ou l'énergie des marées, sont ainsi ajoutées aux sources d'énergie plus conventionnelles pour produire un surcroît d'énergie électrique. On a représenté sur la figure 1 à titre d'exemple une installation 6 de production d'électricité à partir d'énergie solaire et des fermes éoliennes terrestre et maritime 7. Sur la figure 1, les liaisons électriques entre les sources d'énergie et le poste de commande 1 sont représentées en pointillés. On a référencé à titre d'exemple la liaison électrique 73 entre une éolienne maritime 7 et le poste de commande 1 et la liaison électrique 74 entre des capteurs solaires 6 et le poste de commande 1. De la même façon, on a représenté en pointillés des lignes 71 d'alimentation électrique de divers bâtiments 200, 200A, 301 à partir du réseau électrique associé au poste de commande 1.

L'inconvénient des énergies renouvelables réside dans le fait que la production d'énergie électrique par ce moyen est soumise à des aléas climatiques et ne peut pas toujours être ajustée aux périodes de pointe de la demande.

Il est donc souhaitable de pouvoir stocker temporairement l'énergie produite de manière à pouvoir restituer ultérieurement cette énergie lors des pics de la demande.

L'invention met en oeuvre le principe de la génération d'électricité par centrale hydraulique d'accumulation par pompage, selon lequel pendant les périodes de faible demande on accumule de l'énergie potentielle par pompage et stockage d'un volume d'eau dans au moins un réservoir amont 110, l'énergie nécessaire au pompage étant fournie à partir de l'énergie inemployée, et donc à bas coût, du réseau électrique 1 ou, directement ou indirectement à partir des énergies douces disponibles telles que les sources 6, 7 précitées, tandis que pendant les périodes de forte demande on transforme cette énergie potentielle en énergie cinétique pour produire de l'énergie électrique à l'aide d'au moins une centrale ou microcentrale hydroélectrique 130, l'eau étant renvoyée vers un réservoir aval 120 en attente d'être pompée à nouveau lors d'une prochaine période creuse de la demande.

Les installations connues de ce type font souvent appel à des bassins naturels de stockage qui se trouvent parfois très éloignés des zones de forte demande en énergie.

Dans d'autres cas une installation avec des réservoirs artificiels est créée spécialement pour une application dédiée au stockage de l'énergie potentielle et à la création de l'énergie électrique d'appoint. Dans ce cas, les constructions de réservoirs en hauteur ou en souterrain impliquent toujours des investissements très importants qui rendent les équipements peu rentables.

Par ailleurs l'intégration de certains au moins du ou des réservoirs amont et du ou des réservoirs aval dans des bâtiments conçus à d'autres fins est souhaitable, mais n'a pas donné lieu à ce jour à des réalisations concrètes car ce procédé représente de nombreux inconvénients notamment lorsqu'il s'agit d'intégrer des réservoirs à la partie supérieure de bâtiments.

Selon l'invention telle que représentée sur la Figure 1 avec différents modes de réalisation, selon un premier exemple de réalisation au moins un réservoir amont 110 est créé à la partie inférieure d'un bâtiment 100, dont la construction est rendue nécessaire par une fonction première précise différente de la production d'électricité ou de la gestion de l'eau (par exemple parking, bureaux, logements, équipement culturel ou sportif, entrepôt, usine,...). De tels bâtiments ne sont ainsi pas construits uniquement pour placer une réserve d'eau, comme un château d'eau, mais présentent une vocation première différente. L'incorporation de réservoirs de stockage 110 de façon enterrée ou semi-enterrée dans les fondations des bâtiments ne constitue qu'une vocation secondaire des bâtiments. Du fait que les fondations nécessaires à la construction du bâtiment servent également à une partie de l'infrastructure des réservoirs et réciproquement, le coût additionnel pour réaliser des centrales hydrauliques d'accumulation par pompage reste marginal, et il suffit de veiller à délocaliser le ou les réservoirs aval situés en position basse en profitant d'une déclivité du terrain.

Le réservoir aval 120 peut ainsi être constitué par un lac artificiel ou de préférence par une étendue d'eau naturelle existante telle qu'un lac, un cours d'eau, une mer ou un océan.

Un réservoir aval unique peut ainsi être associé à plusieurs réservoirs amont analogues au réservoir 110 de la Figure 1. Le réservoir aval 120 constitue alors une réserve commune dont le volume est supérieur ou égal à celui de l'ensemble des réservoirs amont 110 avec lesquels ce réservoir aval coopère.

Des capteurs de niveau de liquide 180 sont associés respectivement aux réservoirs amont 110 et le cas échéant à l'étendue d'eau constituant le réservoir aval 120 commun, en particulier si cette étendue d'eau ne présente pas un volume très supérieur à celui des réservoirs amont 110.

Dans l'un des modes de mode de réalisation de la figure 1, on voit qu'une microcentrale hydroélectrique 130 destinée à recevoir de l'eau d'un réservoir amont 110 est située au voisinage du réservoir aval 120 afin de pouvoir placer une turbine au plus près de la dénivellation maximale par rapport au réservoir amont, en bas d'une conduite forcée 140 présentant un minimum de coudes, à un endroit où l'énergie cinétique est maximale. L'eau en sortie de la turbine de la microcentrale 130 est transférée par une canalisation secondaire vers le réservoir commun aval 120. Une vanne commandée 150 est en outre placée sur la conduite forcée 140.

Selon un mode de réalisation possible, la centrale hydroélectrique 130 peut constituer une machine réversible dans laquelle la partie hydraulique peut fonctionner aussi bien en pompe qu'en turbine tandis que la partie électrique peut fonctionner aussi bien en moteur qu'en alternateur. La centrale peut alors fonctionner avec des conduites à double sens de circulation du fluide. Toutefois, selon d'autres modes de réalisation possibles, un système de pompage distinct est couplé à la centrale hydroélectrique. Selon les modes de réalisation envisagés, on peut mettre en oeuvre deux conduites distinctes de mise en communication entre un réservoir amont et un réservoir aval, l'une servant au pompage et l'autre au turbinage, pour permettre le cas échéant un pompage et un turbinage simultanés. Toutefois, la mise en oeuvre d'une conduite commune unique à double sens de circulation du liquide peut s'avérer suffisante lorsqu'il est seulement nécessaire d'effectuer en alternance un turbinage et un pompage.

En mode accumulation, l'énergie électrique fournie au poste de commande 1 par des lignes 74 ou 72, 73 à partir d'une ferme solaire 6 ou éolienne 7 par exemple, ou encore directement par le réseau électrique en période creuse, alimente la machine fonctionnant en moteur qui actionne la pompe pour faire remonter l'eau du réservoir aval 120 vers le réservoir amont 110 correspondant à la centrale hydroélectrique considérée et constituer une énergie potentielle. En mode restitution, la turbine recevant l'énergie cinétique de l'eau circulant dans la conduite forcée 140 entraîne l'alternateur qui produit de l'énergie électrique renvoyée au poste de commande 1 par des lignes 171.

Différentes turbines peuvent être utilisées en fonction de la hauteur de chute de l'eau et du débit. On peut par exemple utiliser des turbines du type Kaplan, Francis ou Pelton qui satisferont à la demande dans la plupart des cas. Il n'est toutefois pas exclu d'utiliser d'autres types de centrales hydroélectriques plus spécifiques, par exemple des turbines de type Turgo ou Banki.

En règle générale, pour des centrales hydroélectriques d'une puissance comprise entre 100 kW et 1 MW, il est préférable d'utiliser des turbines et des pompes séparées pour des raisons hydrauliques et économiques, bien que des machines couplant turbines et pompes soient envisageables, sous réserve de sélectionner avec soin les points de fonctionnement.

Pour des puissances comprises entre 1 MW et 4 MW, il est également dans la plupart des cas préférable d'utiliser une turbine et une pompe séparées. Dans certains cas, on peut toutefois utiliser une turbine couplée à une pompe, telle que par exemple une turbine connue sous la dénomination « Deriaz ».

Chaque centrale hydroélectrique 130 comprend également des organes de commande et de contrôle.

La conduite forcée 140 de mise en communication entre le réservoir 110 et le réservoir 120 présente une pente d'au moins 3% et de préférence supérieure à 5% et présente un dénivelé d'au moins 5 mètres et de préférence compris entre 10 et 50 mètres, des dénivelés plus importants étant naturellement possibles si la topographie de l'environnement le permet.

La conduite forcée peut présenter de préférence un diamètre compris entre 0,30m et 1m et être réalisée en acier ou en béton par exemple, ou encore en matière plastique et/ou fibre de verre. Les caractéristiques sont a priori les mêmes pour chacune des conduites lorsque deux conduites distinctes à sens unique sont utilisées pour le turbinage et le pompage.

Le réservoir 110 peut présenter un volume d'au moins 500 m³, mais peut de préférence présenter un volume largement supérieur, par exemple de l'ordre de 5000 à 30000 m³. Par ailleurs, il est possible d'utiliser plusieurs réservoirs installés dans les fondations de différents bâtiments et reliés entre eux, comme cela sera indiqué plus loin.

Des vannes commandées 150 sont situées sur les conduites reliant les réservoirs amont 110 aux centrales hydroélectriques 130, soit à la sortie des réservoirs 110, soit à l'entrée des centrales hydroélectriques 130. Des vannes commandées peuvent également être placées après les centrales hydroélectriques 130.

Pour des réalisations avec une chute d'eau de faible hauteur, de l'ordre de 5 à 8m, la hauteur d'aspiration des turbines et la localisation des équipements permettent de se connecter directement à un plan d'eau moyennant une adduction à l'air libre, par exemple à l'aide d'un simple canal ou d'une conduite sans pression, donc à proximité immédiate du réservoir amont et le cas échéant à son niveau.

On notera que pour des hauteurs de chute d'eau supérieures à environ 8m, c'est-à-dire supérieures à la pression atmosphérique, les turbines doivent être impérativement à l'élévation du réservoir aval 120, mais pas nécessairement à proximité immédiate de ce réservoir aval 120. Il est ainsi possible de délocaliser la turbine et l'ensemble de la centrale hydroélectrique pour qu'elle se trouve dans un local technique, enterré ou non, au même niveau que le réservoir aval 120 tel qu'une rivière, sans être directement sur la berge de cette rivière, et donc sans être directement au voisinage de ce réservoir aval 120, mais en étant par exemple enterrée sous le réservoir amont 110.

On décrira plus loin des modes de réalisation dans lesquels on utilise une centrale hydroélectrique commune à plusieurs réservoirs amont intégrés à des bâtiments différents et disposés sensiblement au même niveau. Ceci permet de rationaliser la conception et de diminuer les coûts de mise en oeuvre et de maintenance en concentrant la production d'énergie électrique dans une seule centrale hydroélectrique coopérant avec plusieurs réservoirs amont. Dans ce cas il existe une seule connexion avec le poste de commande et de transformation 1 du réseau électrique principal.

Si l'on se réfère toujours à la Figure 1, on voit un autre mode de réalisation de l'invention dans lequel un réservoir amont 210 est réalisé dans les fondations d'un bâtiment 200, comme dans le mode de réalisation précédemment décrit, mais un réservoir aval 220 est également de la même manière réalisé dans les fondations d'un autre bâtiment 200A disposé en contrebas par rapport au premier bâtiment 200.

Dans ce cas, de façon avantageuse, chacun des réservoirs amont 210 et aval 220 peut être associé à une installation de climatisation et/ou de chauffage comprenant une pompe à chaleur 291, 292, comme cela sera explicité plus loin, mais il est naturellement possible également de n'associer qu'un seul réservoir 210 ou 220 avec une telle installation de climatisation et/ou de chauffage, de même que le réservoir 110 décrit plus haut pourrait également être associé à une pompe à chaleur le cas échéant.

Les réservoirs amont 210 et aval 220 sont mis en communication par au moins une conduite 240 équipée d'une vanne commandée 250. Une centrale hydroélectrique 230 comprenant une turbine et une installation de pompage, qui peuvent être placées au voisinage du réservoir aval 220, sont disposées au niveau de la conduite 240. La centrale hydroélectrique 230 joue le même rôle que la centrale hydroélectrique 130 et est reliée au poste de commande 1 du réseau électrique par une ligne 271. Des capteurs de niveau de liquide 280A, 280B sont associés à chacun des réservoirs 210 et 220.

Dans le mode de réalisation avec intégration des réservoirs amont 210 et aval 220 dans les fondations de bâtiments, on peut considérer le cas particulier où le réservoir aval 220 constitue une source chaude pour une installation de climatisation de tout ou partie du bâtiment 200A ou de bâtiments associés voisins, l'installation de climatisation comprenant au moins une pompe à chaleur 292.

De façon similaire, le réservoir amont 210 pourrait jouer le même rôle vis-à-vis d'une installation de climatisation du bâtiment 200. Toutefois, d'un point de vue thermique, il peut être avantageux de faire plutôt jouer au réservoir amont 210 le rôle de source froide pour une installation de chauffage de tout ou partie du bâtiment 200 ou de bâtiments associés voisins, l'installation de chauffage comprenant au moins une pompe à chaleur 291.

Naturellement, le réservoir aval 220 pourrait également jouer le rôle de source froide pour une installation de chauffage de tout ou partie du bâtiment 200A ou de bâtiments associés voisins, l'installation de chauffage comprenant au moins une pompe à chaleur 292.

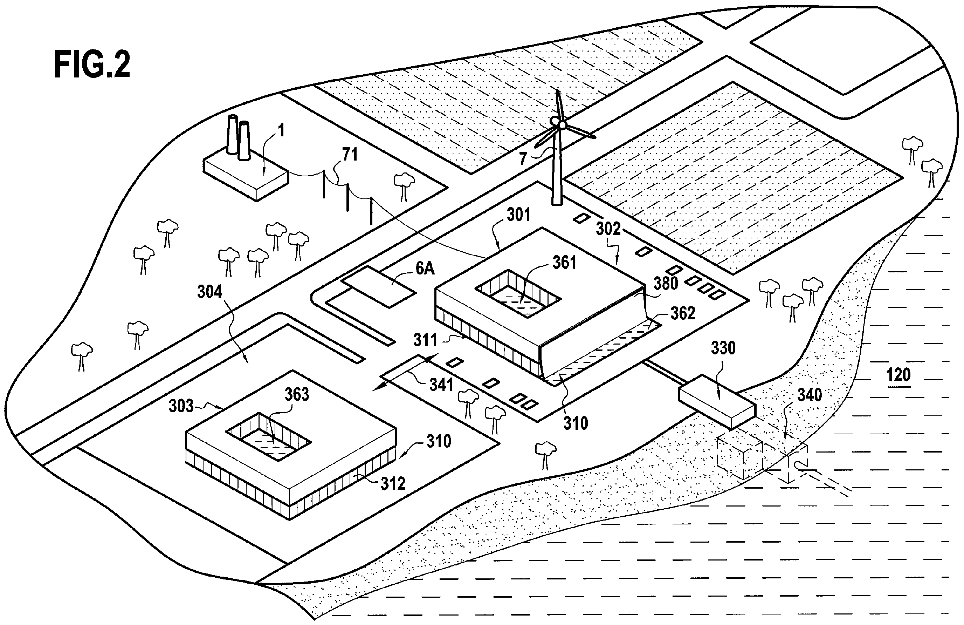

Si l'on considère toujours la Figure 1, ainsi que la figure 2, on voit encore un autre exemple d'installation selon l'invention qui comprend un réservoir d'eau amont multiple 310 comprenant un premier réservoir élémentaire 311 placé dans les fondations d'un premier bâtiment 301, qui peut être tout type de bâtiment artificiel ayant vocation à recevoir des biens ou des personnes, et qui s'étend également sous un parking 302 entourant le bâtiment 301, et au moins un deuxième réservoir élémentaire 312 placé dans les fondations d'un autre bâtiment 303 qui peut être ou non du même type que le premier bâtiment 301. Les deux réservoirs élémentaires 311 et 312, qui sont situés sensiblement au même niveau, sont reliés entre eux par une conduite d'équilibrage 341. Le premier réservoir élémentaire 311 est relié à une conduite forcée 340 qui débouche dans un réservoir aval 120 situé à un niveau inférieur à l'ensemble des réservoirs élémentaires 311, 312 et dont le volume est supérieur ou égal à la somme des volumes des réservoirs élémentaires 311, 312. Le réservoir aval 120 est ainsi avantageusement constitué par une étendue d'eau naturelle ou artificielle au voisinage du niveau du sol, comme par exemple un lac, une rivière, la mer ou un réservoir d'assainissement d'eau.

Une centrale hydroélectrique 330, qui est reliée par une ligne 371 au poste de contrôle 1 du réseau électrique et comprend une turbine et une installation de pompage, et une vanne commandée 350, en liaison avec un module de commande, permet de produire de l'énergie électrique lorsqu'un débit d'eau s'écoule de façon sélective dans la conduite forcée des réservoirs élémentaires 311, 312 vers le réservoir aval 120 pendant des périodes de pointe de demande d'électricité sur le réseau et de faire remonter par pompage l'eau du réservoir aval 120 vers les réservoirs élémentaires amont 311, 312 en période creuse de demande d'électricité.

Comme déjà indiqué plus haut, dans les cas où les dénivelés entre les réservoirs élémentaires 311, 312 et le réservoir aval 120 sont relativement faibles, en pratique compris entre 5 et 8 mètres, la centrale hydroélectrique 330 peut être placée sensiblement au niveau des réservoirs élémentaires 311, 312. Ceci est applicable également aux autres modes de réalisation. Dans le troisième mode de réalisation qui vient d'être décrit, quel que soit le dénivelé, il est aussi possible d'installer la centrale hydroélectrique 330 au niveau du réservoir aval 120. Par ailleurs, les réservoirs élémentaires 311, 312 sont équipés de capteurs de niveau 380A, 380B comme les réservoirs des modes de réalisation précédemment décrits.

Sur les figures 1 et 2, on a représenté les bâtiments 301 et 303 associés à des parkings comportant des auvents de protection équipés de panneaux solaires 6A qui peuvent contribuer à assurer l'alimentation de l'installation de pompage de la centrale hydroélectrique 330, au même titre que d'autres sources d'énergies douces 6, 7 ou que le réseau électrique en période creuse de la demande.

On a également représenté sur la figure 1 des réservoirs élémentaires 311, 312 pouvant servir de source chaude pour une installation de climatisation comprenant une pompe à chaleur 391, 392 ou pouvant servir de source froide pour une installation de chauffage comprenant également de façon similaire une pompe à chaleur 391, 392. Les installations de climatisation ou de chauffage sont ici représentées comme s'appliquant directement aux bâtiments 301 et 303 à la base desquels sont formés les réservoirs 311 et 312, et qui peuvent être des centres commerciaux ou des immeubles de bureaux par exemple, mais les installations de climatisation et de chauffage pourraient aussi être situées dans des bâtiments annexes voisins des bâtiments 301 et 303.

Sur la figure 2, on voit que si les réservoirs élémentaires 311, 312 constituant le réservoir amont 310 sont formés dans les fondations des bâtiments 301 et 303 et constituent des espaces essentiellement fermés, ceux-ci sont compartimentés et des parties 361, 362 du réservoir élémentaire 311 et une partie 363 du réservoir élémentaire 312 sont à l'air libre afin de remplir des fonctions annexes, telles qu'un rafraîchissement naturel ou une brumisation par exemple. D'autres exemples de fonctions additionnelles de l'eau contenue dans les réservoirs élémentaires du réservoir amont seront mentionnés plus loin.

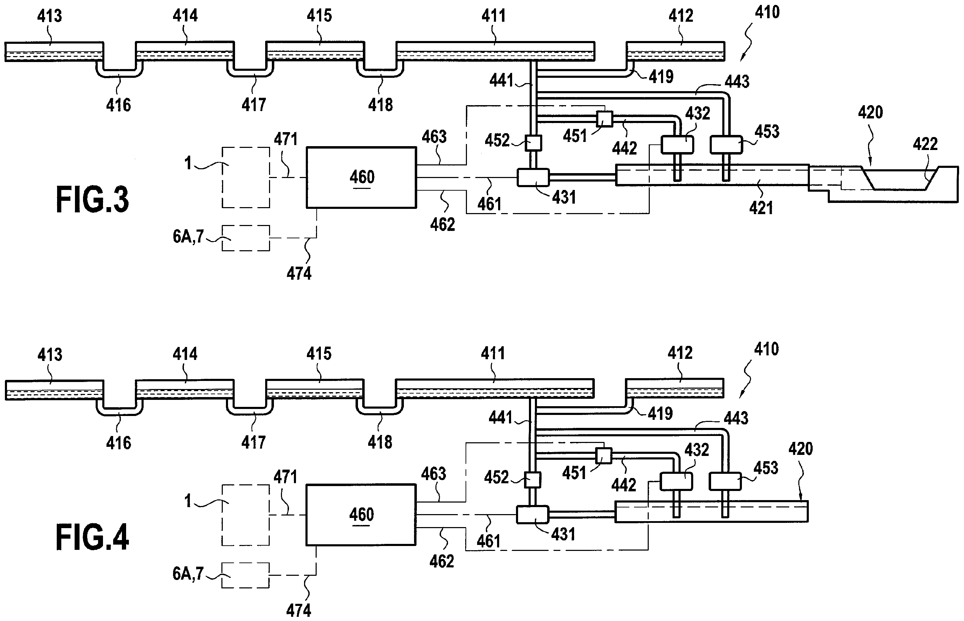

Les Figures 3 et 4 représentent en élévation un exemple d'installation selon l'invention dans laquelle seuls les réservoirs et leurs liaisons ont été représentés, bien que ceux-ci soient conçus pour être intégrés dans les fondations de bâtiments destinés à d'autres usages que la seule production d'énergie.

Sur les Figures 3 et 4, on voit un réservoir aval 420 et un réservoir amont multiple 410 comprenant un réservoir élémentaire principal 411 et une série d'autres réservoirs élémentaires auxiliaires 412 à 415, situés au même niveau que le réservoir élémentaire principal 411 et reliés entre eux par des conduites d'équilibrage 416 à 419. On a représenté un total de cinq réservoirs élémentaires 411 à 415, mais ce nombre n'est pas limitatif et il est tout à fait possible de mettre en oeuvre un nombre plus restreint ou plus important de réservoirs élémentaires, par exemple un total de dix réservoirs élémentaires. Une turbine 432 est située au-dessus du réservoir aval 420 et reçoit le débit d'eau circulant dans une conduite forcée 442 prenant naissance dans le réservoir élémentaire principal 411 et sur laquelle est placée une vanne commandée 451. Une pompe 431 située au niveau du réservoir aval 420 permet de refouler de l'eau dans une conduite 441 équipée d'un clapet anti-retour 452 qui peut être ou non confondue en partie avec la conduite forcée 442. Une conduite supplémentaire 443 munie d'une vanne de vidange 453 peut être disposée en parallèle par rapport à la conduite forcée 442.

Le mode de réalisation de la Figure 3 ne diffère de celui de la Figure 4 que par la présence d'un réservoir aval 420 en deux parties comprenant un premier réservoir 421 de surface limitée associé à un déversoir 422.

Sur les figures 3 et 4, on a également représenté de façon symbolique un circuit de commande 460 permettant de coupler par des lignes 461, 471 l'installation de pompage 431 au réseau de distribution par le poste de commande 1 pendant des périodes creuses de consommation d'électricité et de coupler la centrale hydroélectrique 432 par des lignes 462, 471 au réseau de distribution par le poste de commande 1 pendant des périodes de pointe de consommation d'électricité. On a également représenté sur les figures 3 et 4 une ligne 463 de commande de la vanne commandée 451 et une ligne 474 optionnelle pour recevoir de l'électricité produite localement par exemple par des capteurs solaires 6A ou des éoliennes 7 permettant d'alimenter localement le circuit de commande 460 et, par la ligne 461, la pompe 431 en complément ou en remplacement du réseau électrique géré par le poste de commande 1. Le réseau électrique peut être un réseau local, régional, national ou transnational.

L'invention peut être mise en oeuvre selon de très nombreuses variantes de réalisation. En particulier, la centrale hydroélectrique associée à un réservoir aval situé dans les fondations d'un bâtiment artificiel peut permettre de produire de l'électricité servant à alimenter un réseau électrique classique en période de pointe, lorsqu'un réservoir amont préalablement rempli en période creuse est vidangé, mais peut aussi permettre de rendre plus autonome l'alimentation en énergie électrique de ce bâtiment ou de bâtiments associés, tels que des parkings par exemple. L'autonomie est accrue si des sources d'énergie renouvelable sont utilisées pour actionner le dispositif de pompage assurant le remplissage d'au moins un réservoir amont à partir d'une réserve d'eau située dans le réservoir aval. Lors de la vidange du ou des réservoirs amont, l'électricité produite par la centrale hydroélectrique peut être utilisée localement, par exemple pour servir à l'éclairage de locaux, ou encore pour assurer la recharge de batteries d'alimentation de véhicules électriques placés dans le parking, d'autres types d'utilisation locale de l'énergie électrique étant naturellement possibles.

Si l'on se reporte à nouveau à la figure 1, on voit encore un autre mode de réalisation de l'invention selon lequel un réservoir amont 315 est constitué par une étendue d'eau naturelle ou artificielle indépendante de bâtiments et un réservoir aval est constitué par un ou plusieurs réservoirs 312, 311 qui sont intégrés de façon enterrée ou semi-enterrée dans les fondations de bâtiments artificiels 303, 301 tels que des immeubles de bureaux ou des centres commerciaux par exemple. Une conduite forcée 342 relie le réservoir amont 315 à une centrale hydroélectrique 332 qui est située au niveau des réservoirs 312, 311. Une vanne commandée 352 est située sur la conduite forcée 342.

La présente invention se prête également à des montages en cascade. Ainsi, comme représenté sur la figure 1, les réservoirs 311 et 312 peuvent constituer des réservoirs aval pour une première installation mettant en oeuvre le réservoir amont 315, tel qu'un lac par exemple, et ces mêmes réservoirs 311 et 312 reliés par la conduite d'équilibrage 341 peuvent constituer des réservoirs élémentaires d'un réservoir amont d'une autre installation mettant en oeuvre le réservoir aval 120, tel qu'une mer, un lac ou une rivière par exemple. Le nombre de réservoirs élémentaires 311, 312 n'est pas limité, mais dans tous les cas dans l'ensemble d'une installation, il existe au moins un des réservoirs qui est intégré de façon enterrée ou semi-enterrée dans les fondations de bâtiments artificiels, de façon à réduire les coûts des infrastructures qui sont en partie communes au bâtiment et au réservoir, ce dernier renforçant également la structure mécanique de la base du bâtiment, et aussi offrir une possibilité de synergie supplémentaire en permettant au volume d'eau stocké dans ces réservoirs de réaliser d'autres fonctions, notamment sur le plan thermique, qui seront décrites de façon plus détaillée plus loin.

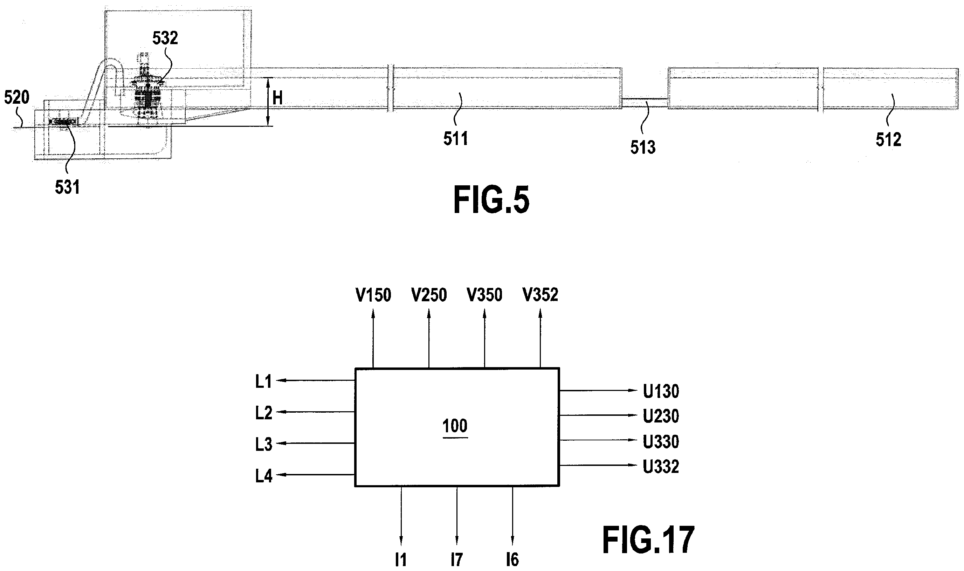

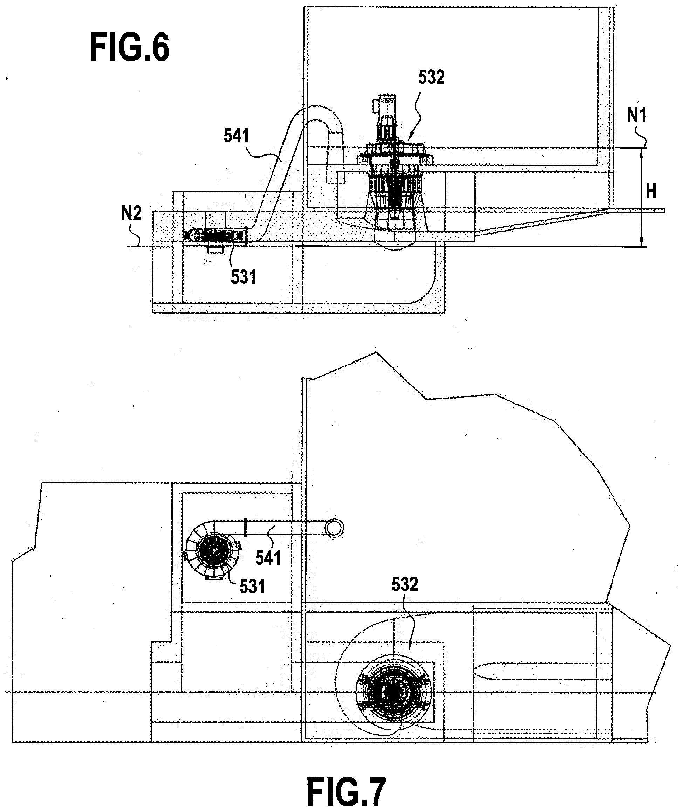

La Figure 5 montre un premier réservoir élémentaire amont 511 relié par une conduite d'équilibrage 513 à un deuxième réservoir élémentaire amont 512, les réservoirs élémentaires amont 511 et 512 étant fermés et inclus dans les fondations de bâtiments non représentés. A titre d'exemple, les réservoirs élémentaires amont 511 et 512 présentent chacun une hauteur de 3 mètres et des volumes de 30000m³ et 15000m³ respectivement. Il est défini une hauteur de chute H de par exemple 5 mètres entre le niveau d'eau amont N1 dans les réservoirs élémentaires supérieurs 511, 512 et un niveau d'eau aval N2 d'un réceptacle inférieur 520, tel qu'une rivière (voir Figure 6).

On a représenté sur la Figure 5 un exemple de pompe 531 située au niveau du réceptacle inférieur 520 et une turbine 532 qui, compte tenu de la faible hauteur de chute d'eau, est située à proximité du premier réservoir élémentaire supérieur 511. La turbine 532 peut ainsi être connectée au plan d'eau supérieur par une adduction à l'air libre telle qu'un canal ou une conduite sans pression.

Les Figures 6 et 7 montrent de façon agrandie en élévation et en vue de dessus la pompe 531 avec sa conduite de refoulement 541 et la turbine 532.

Dans le cas où les réservoirs d'eau constituent également des sources chaudes ou des sources froides pour des installations de climatisation ou de chauffage, on peut obtenir des ensembles de bâtiments particulièrement économes en énergie, puisque les volumes d'eau agissant pour la régularisation de la production d'énergie électrique permettent également une rationalisation du fonctionnement des installations de chauffage et de climatisation et donc une réduction de la consommation d'énergie globale. On sait en particulier que les supermarchés sont très gourmands en énergie pour la climatisation et la réfrigération, de sorte que la présence dans le même bâtiment ou à proximité de celui-ci, par exemple sous un parking, d'une installation selon l'invention s'avère particulièrement bénéfique. Chaque installation de climatisation ou de chauffage peut comprendre plusieurs petites pompes à chaleur dont le fonctionnement est mutualisé, plutôt qu'une seule pompe à chaleur de plus forte puissance par installation.

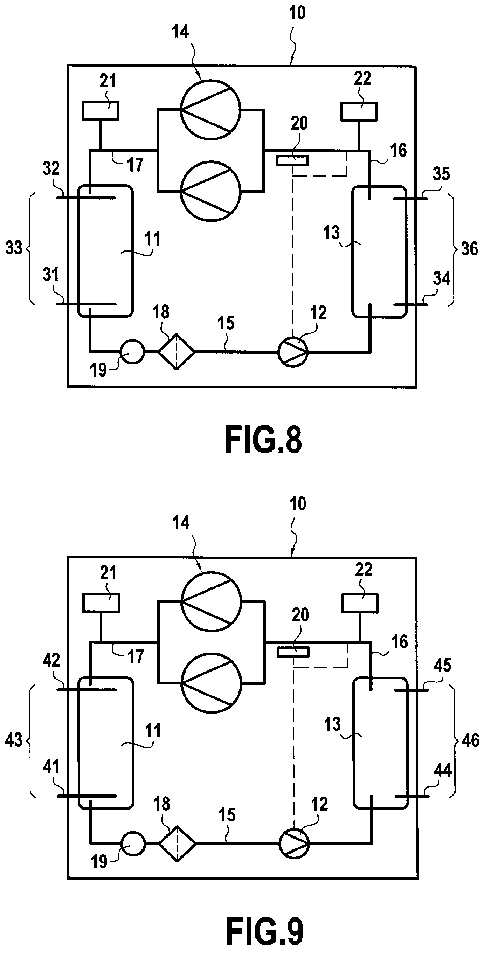

On a représenté sur la figure 8 le schéma frigorifique d'un exemple de circuit 10 de pompe à chaleur sur eau claire pouvant être mis en oeuvre avec une installation selon l'invention, dans laquelle un réservoir d'eau constituant une source froide 36 est installé dans les fondations d'un bâtiment muni d'un circuit de chauffage 33.

La pompe à chaleur 10 comprend un circuit de circulation de fluide frigorigène avec au moins un condenseur 11, qui comprend lui-même un circuit secondaire d'échange de chaleur avec une entrée d'eau 31 et une sortie d'eau 32 reliées à un circuit de chauffage 33, un détendeur 12, un évaporateur 13, qui comprend lui-même un circuit secondaire d'échange de chaleur avec une entrée d'eau 34 et une sortie d'eau 35 reliées à un réservoir d'eau enterré ou semi-enterré 110 ; 210 ; 220 ; 311, 312 constituant la source froide 36, et un groupe compresseur 14.

De façon plus particulière, on voit sur la ligne 15 reliant le condenseur 11 au détendeur 12 un filtre 18 et un voyant 19 de fonctionnement. La ligne 16 reliant l'évaporateur 13 au groupe compresseur 14 comprend un capteur de température 20 et un capteur basse pression 22. La ligne 17 reliant le groupe compresseur 14 au condenseur 11 comprend elle-même un capteur haute pression 21.

Tous les composants 11 à 22 constituant la pompe à chaleur 10 peuvent être rassemblés dans un espace limité du fait de la proximité entre la réserve d'eau 36 et le circuit de chauffage 33. En particulier tout le circuit du fluide frigorigène, tel que du fréon, peut être confiné dans un espace réduit et dans un local technique enterré ou semi-enterré proche du réservoir d'eau 36, ce qui est avantageux pour l'économie du fonctionnement et pour la sécurité. En particulier, du fait de la longueur réduite des conduites de fluide frigorigène, il y a moins de pertes énergétiques, la consommation de fluide frigorigène est réduite et le circuit de circulation de fluide frigorigène peut être confiné dans un espace éloigné des zones des bâtiments recevant du public. L'échange de chaleur avec un liquide au niveau de l'évaporateur 13 est facile et la température de l'eau située dans le réservoir 36 est en général adaptée de façon naturelle aux échanges de chaleur s'opérant dans la pompe à chaleur.

On a représenté sur la figure 9 le schéma frigorifique d'un exemple de circuit 10 de pompe à chaleur constituant un climatiseur à condensation sur eau claire pouvant être mis en oeuvre avec une installation selon l'invention, dans laquelle un réservoir d'eau constituant une source chaude 43 est installé dans les fondations d'un bâtiment muni d'une installation de climatisation avec par exemple des vitrines frigorifiques 46.

Le schéma frigorifique du climatiseur à condensation 10 de la figure 9 est très semblable à celui de la pompe à chaleur 10 de la figure 8 et les éléments communs portent les mêmes références et ne seront pas décrits à nouveau. Dans le schéma de la figure 9, le condenseur 11 comprend une entrée d'eau 41 et une sortie d'eau 42 reliées à un réservoir d'eau enterré ou semi-enterré 110 ; 210 ; 311, 312 constituant une source chaude 43 tandis que l'évaporateur 13 comprend une entrée 44 de fluide caloporteur, tel que par exemple de l'eau glycolée, et une sortie 45 de ce même fluide caloporteur reliées à un circuit de fluide caloporteur circulant dans le circuit de climatisation ou de réfrigération 46.

Comme dans le cas de la pompe à chaleur de la figure 8, tous les composants 11 à 22 constituant le climatiseur à condensation 10 de la figure 9 peuvent être rassemblés dans un espace limité du fait de la proximité entre la réserve d'eau 43 et le circuit de rafraîchissement 46. En particulier, le condenseur 11 peut être installé dans un local technique enterré, ce qui réduit la longueur du circuit de fluide frigorigène, diminue la quantité de fluide frigorigène nécessaire et confine ce circuit de fluide frigorigène dans un espace éloigné des zones recevant du public.

On notera qu'au regard du volume d'un réservoir individuel qui est supérieur à environ 500 m³, la quantité d'eau utilisée pour le fonctionnement d'une pompe à chaleur ou d'un climatiseur à condensation est relativement faible et les variations dans le temps du volume d'eau contenu dans un réservoir 36 ou 43 n'ont pas d'influence notable sur le fonctionnement de l'évaporateur 13 de la figure 8 ou du condenseur 11 de la figure 9, d'autant plus qu'il existe en permanence dans un réservoir 36 ou 43 un volume d'eau résiduel de l'ordre d'au moins 200 m³ pour éviter un désamorçage de la pompe associée à la centrale hydroélectrique. On peut ainsi prévoir de conserver en permanence une valeur minimale pour la hauteur d'eau présente dans chaque réservoir 36 ou 43. Toutefois, même en cas d'absence d'eau momentanée dans un réservoir 36 ou 43, bien que l'eau soit avantageuse par son inertie thermique, le processus d'échange de chaleur au sein d'un évaporateur 13 ou d'un condenseur 11 peut continuer de s'opérer si de l'air est temporairement introduit par les entrées-sorties 34, 35 ou 41, 42, de sorte que le fonctionnement des installations de chauffage ou de climatisation peut se poursuivre sans risque.

On décrira maintenant plus particulièrement des exemples de réalisation de réservoir intégré dans des fondations de bâtiments.

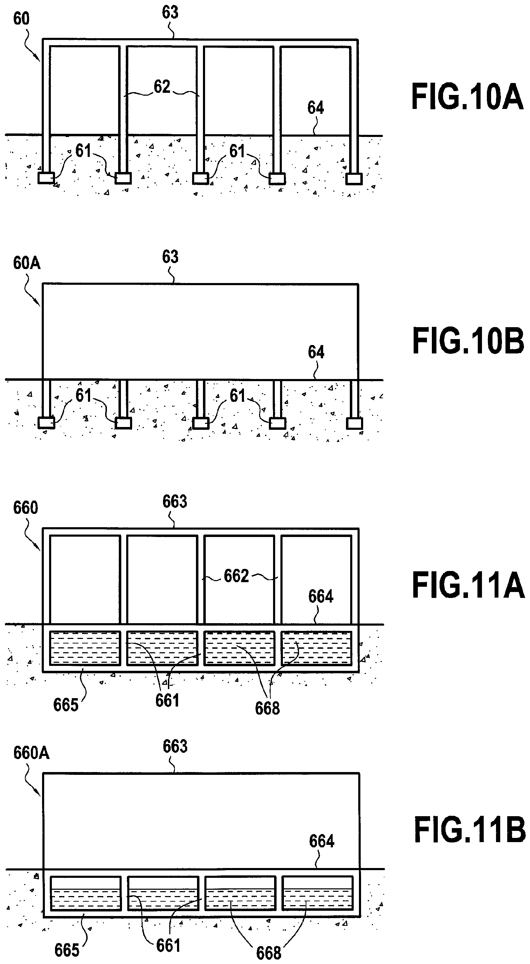

Les figures 10A et 10B montrent des exemples de bâtiments traditionnels 60, 60A sans réservoir d'eau comprenant une superstructure 63, un plancher 64 au niveau du sol et des fondations 61 en forme de pieux ancrés dans le sol. La figure 10A correspond à un sol argileux nécessitant des fondations profondes 61 associées à des piliers 62 de renfort de la superstructure, tandis que la figure 10B correspond à un sol moins instable, tel qu'un sol sableux ou calcaire, mais nécessitant néanmoins des fondations semi-profondes ou profondes 61 sans qu'il soit pour autant indispensable de rajouter des piliers 62. Les sols argileux sont caractéristiques des plateaux tandis que les sols sableux ou calcaires sont caractéristiques des vallées ou des estuaires.

Les figures 11A et 11B montrent des exemples de bâtiments 660, 660A implantés dans des sols analogues à ceux des figures 10A et 10B respectivement, mais dans lesquels un réservoir d'eau a été implanté dans les fondations conformément à l'invention.

On voit ainsi sur la figure 11A des fondations profondes 661 rendues solidaires d'un cuvelage 665 définissant un réservoir d'eau étanche avec un ensemble de compartiments 668 fermés par un plancher 664 et surmontés de piliers 662 supportant la superstructure 663. La construction de l'ensemble du réservoir n'impose pas de travaux de génie civil sensiblement plus compliqués que la réalisation de fondations profondes, mais la présence d'un cuvelage avec un fond constitué par un radier et d'un réservoir compartimenté rigidifie l'ensemble de la structure et améliore ainsi la qualité de la construction.

La construction de la figure 11B est semblable à celle de la figure 11A mais est dépourvue des piliers 662 compte tenu de la nature du terrain qui est moins instable.

Dans le cas de terrains rocheux ou granitiques, on privilégiera des réservoirs de plus grande étendue et de moindre profondeur.

Les réservoirs intégrés dans les fondations d'un bâtiment peuvent présenter par exemple une épaisseur latérale comprise entre 20 et 45cm, par exemple de 30cm, et une épaisseur de fond comprise entre 10 et 25cm, par exemple de 15cm, ce qui permet à la fois de disposer de la résistance mécanique nécessaire et d'incorporer ces parois dans les fondations d'un bâtiment sans surcoût de génie civil.

Comme cela a déjà été indiqué, les surfaces et volumes des réservoirs peuvent présenter diverses valeurs en fonction de la configuration des bâtiments et de la puissance souhaitée pour l'installation. On peut ainsi envisager des réservoirs élémentaires de relativement petite taille intégrés dans des immeubles, de par exemple 1200 m³, (soit par exemple 2m x 20m x 30m), de 2400 m³, (soit par exemple 2m x 30m x 40m), ou encore de 4800 m³, (soit par exemple 2m x 40m x 60m), mais les réservoirs élémentaires peuvent aussi être réalisés avec une taille plus importante, notamment si l'on réalise des excavations dans des zones d'activités commerciales, artisanales, industrielles ou tertiaires. Dans ce cas, on peut par exemple prévoir un réservoir élémentaire principal de grande taille, par exemple de 30 000 m³ (soit par exemple 3m x 100m x 100m) et un à dix réservoirs élémentaires auxiliaires de taille moyenne de par exemple 15 000 m³ (soit par exemple 3m x 50m x 100m).

Chaque réservoir élémentaire intégré à des fondations d'un bâtiment présente de préférence une profondeur enterrée inférieure ou égale à 12m et une portion de superstructure inférieure ou égale à 3m. La réalisation d'un cuvelage n'est ainsi pas fondamentalement différente de celle d'une piscine classique par exemple, mais le volume d'eau d'au moins une grande partie de chaque réservoir enterré ou semi-enterré sera fermé pour des questions de sécurité.

Selon la topographie du terrain, la hauteur de chute H entre un réservoir amont et un réservoir aval peut varier typiquement entre 5m et 100m. Les conduites forcées doivent présenter une pente d'au moins 3%. En pratique, les pertes de charge et les rendements sont acceptables si l'on choisit une longueur de conduite forcée qui est au maximum de l'ordre de vingt fois la hauteur de chute. En fonction du volume d'eau disponible dans les réservoirs amont (par exemple entre 45 000 m³ et 180 000 m³), on peut disposer de débits compris par exemple entre 4,2 m³/s et 16,7 m³/s pour des diamètres de conduite forcée compris entre 1,45m et 2,5m respectivement. La génération d'énergie électrique en période de pointe (d'une durée estimée à trois heures) pourra être comprise entre environ 450 kWh et 37 700 kWh, celle-ci étant d'autant plus importante que le volume d'eau des réservoirs amont est plus important et que la hauteur de chute est plus importante.

Ainsi, une optimisation technique et économique est obtenue avec un volume cumulé supérieur à environ 70 000 m³ pour les réservoirs amont et une hauteur de chute égale ou supérieure à 15 mètres, mais des avantages significatifs peuvent néanmoins déjà être obtenus à partir d'un volume de l'ordre de 500 à 1000 m³ et une hauteur de chute de 5 mètres. Des installations selon l'invention sont ainsi adaptées pour développer une puissance comprise entre 100 kW et 4 MW et plus particulièrement entre 300 kW et 4 MW.

En tout état de cause, les réservoirs élémentaires restent d'une taille telle qu'ils peuvent être intégrés dans les fondations de constructions traditionnelles sans qu'il soit nécessaire de faire appel aux techniques de construction des barrages et donc sans investissement de génie civil supplémentaire par rapport aux constructions traditionnelles de bâtiments.

Naturellement, l'actionnement des pompes requiert une énergie, mais l'énergie de pompage peut être utilement obtenue en dehors des périodes de pointe à partir des énergies douces (solaire ou éolien par exemple) ou à partir du réseau électrique lui-même dans des périodes creuses où la charge du réseau électrique est insuffisante et où le fait d'utiliser l'énergie électrique disponible permet de lisser la consommation et donc de régulariser le fonctionnement du réseau.

Le choix du type de turbine dépend essentiellement de la hauteur de chute H disponible. Ainsi, des turbines de type Kaplan sont bien adaptées à de faibles hauteurs de chute, de l'ordre de 5 à 20 mètres, tandis que des turbines de type Francis ou de type Pelton sont préférables pour des hauteurs de chute importantes, par exemple de l'ordre de 20 à 100 mètres.

La longueur des conduites forcées peut être adaptée à l'environnement. On peut ainsi réaliser des conduites courtes, dont la longueur est de l'ordre de deux fois la hauteur de chute, ou des conduites longues, jusqu'à environ une longueur de 2 kilomètres, qui peuvent par exemple suivre le tracé de voies routières préexistantes. La section des conduites peut être comprise par exemple entre 0,30m et 3m.

Les conduites d'équilibrage entre réservoirs élémentaires, qui ne sont pas sous pression, peuvent être réalisées en béton, en acier, en PVC ou encore en plastique renforcé par fibre de verre. Elles donnent lieu à peu de pertes de charge et peuvent présenter des sections comprises entre 0,20m et 2,5m. La distance entre deux réservoirs élémentaires d'un même ensemble de réservoirs associés à une même centrale hydroélectrique, c'est-à-dire la longueur d'une conduite d'équilibrage, est de préférence inférieure ou égale à 1000m.

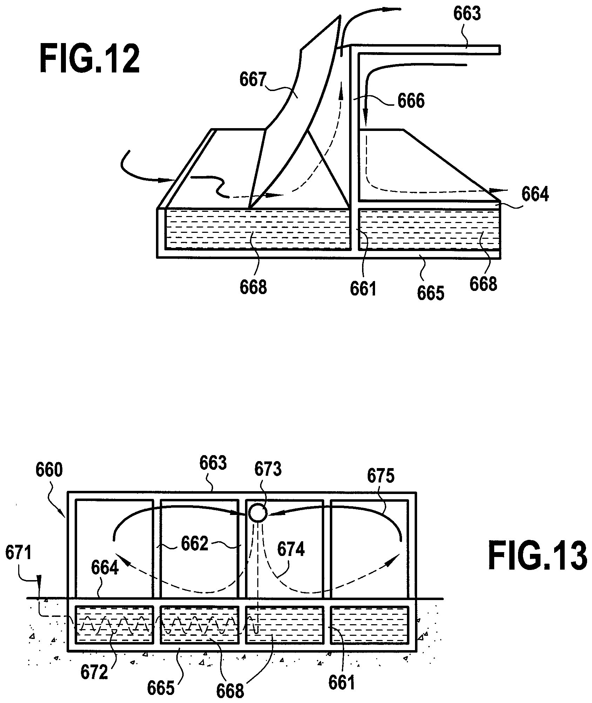

On décrira maintenant en référence aux figures 12 à 16 diverses variantes de réalisation de l'invention dans lesquelles la réserve d'eau joue un ou plusieurs rôles supplémentaires en plus de la fonction de stockage d'énergie potentielle.

Il est d'abord à noter que la présence d'un volume d'eau important à la base d'un bâtiment contribue fortement à régulariser la température ambiante par un effet naturel d'inertie thermique.

Par ailleurs, compte tenu des mouvements de l'eau provoqués de façon répétée par les décharges en période de pointe de demande de courant et de recharge en période creuse de consommation de courant, l'eau n'est pas stagnante dans le réservoir et ne pose pas de problème de pollution.

Généralement, déjà au cours d'une même journée des périodes de creux et de pic de demande de courant peuvent alterner, de sorte qu'il existe dans ce cas des mouvements de va-et-vient quotidiens d'au moins une partie de l'eau entre le réservoir placé sous un bâtiment et un deuxième réservoir placé à un niveau différent.

Mais l'invention s'applique aussi à des processus de remplissage et de vidange d'amplitude plus grande, par exemple avec des périodicités de plusieurs jours ou plusieurs semaines, voire de plusieurs mois pour tenir compte de pointes de consommation saisonnières.

Par ailleurs, le volume d'eau cumulé d'un réservoir est de préférence supérieur à 1000 m³ et de préférence au moins de l'ordre de 10000 m³, voire dix fois supérieur, de sorte que l'on peut utiliser de l'eau du réservoir placé dans un bâtiment pour d'autres besoins annexes nécessitant une présence d'eau mais en relativement faible quantité sans affecter le rôle de réserve pour les besoins de la création d'énergie potentielle.

On voit sur la figure 12 à titre d'exemple la représentation schématique de l'utilisation d'eau des compartiments 668 d'un réservoir dont le fond est référencé 665 et qui est placé dans les fondations 661 d'un bâtiment présentant un plancher 664, un mur de façade 666 et un plafond 663, pour créer une façade bio-climatique et rafraîchir naturellement cette façade. Un compartiment 668 du réservoir enterré est placé à l'extérieur du bâtiment devant la façade avec une surface supérieure à l'air libre et constitue ainsi un bassin de rétention. Une paroi inclinée 667, qui peut être transparente ou translucide, est arrosée et placée devant la façade en ménageant un espace libre entre cette paroi 667 et la façade 666, de sorte que de l'air chaud extérieur refroidi par l'eau de ruissellement récupérée dans ce compartiment 668 remonte le long de la façade 666 derrière la paroi inclinée 667 pour refroidir cette façade 666. L'air réchauffé au niveau du toit 663 peut également être rafraîchi à l'intérieur du bâtiment du fait que le sol 664 se trouve sur une masse d'eau du reste du réservoir enterré sous le bâtiment.

Naturellement, le mur d'eau créé au niveau de la façade et le bassin ouvert présent devant cette façade peuvent en outre créer un effet esthétique en plus de l'action de régulation de température.

La figure 13 montre un exemple de ventilation naturelle renforcée obtenue dans un bâtiment 660 équipé d'un réservoir enterré ou semi-enterré selon l'invention. Le bâtiment peut ainsi être rafraîchi de façon naturelle par un système dit de puits canadien qui permet un contrôle des apports calorifiques.

De l'air extérieur est introduit par une entrée 671 dans un réseau de canalisations 672 pouvant être en forme de serpentins et placées sur le fond 665 du réservoir pour permettre un rafraîchissement de l'air par échange thermique avec l'eau du réservoir enterré ou semi-enterré. L'air rafraîchi dans les canalisations 672 est réinjecté à l'intérieur du bâtiment 660 par une sortie 673 placée en hauteur par exemple au voisinage du plafond 663 dans un espace central du bâtiment 660. Les lignes fléchées 674 et 675 symbolisent le parcours de l'air qui rafraîchit d'abord l'atmosphère interne du bâtiment (lignes fléchées 674) avant de se réchauffer (lignes fléchées 675) et d'être évacué vers l'extérieur à la partie supérieure du bâtiment. Il se produit ainsi sans consommation d'eau, mais grâce à la présence de celle-ci, par convexion un phénomène de ventilation naturelle renforcée.

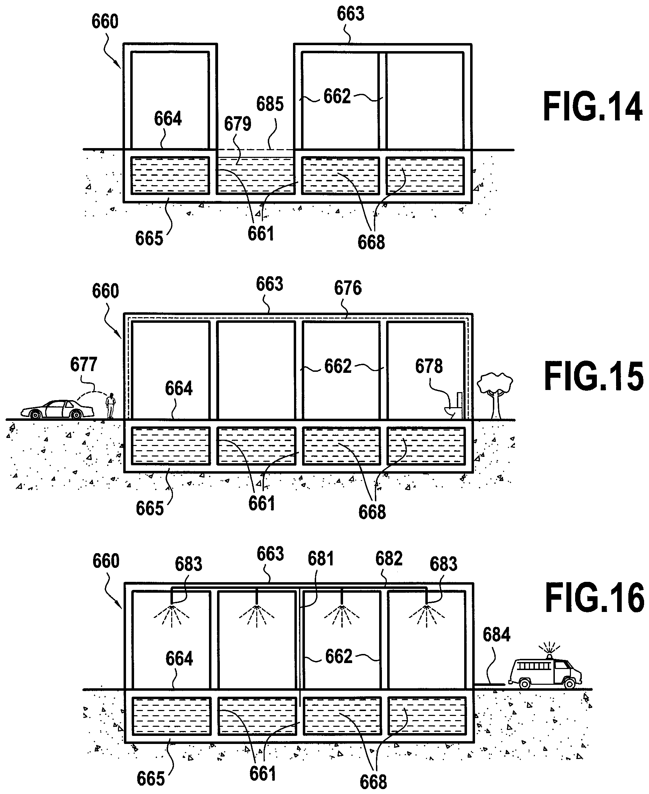

La figure 14 montre un autre exemple de rafraîchissement naturel possible en ménageant, comme dans le mode de réalisation de la figure 2, pour un compartiment 668 du réservoir enterré ou semi-enterré, un bassin à l'air libre 679 qui peut servir à divers usages : piscine, bassin décoratif, effets de brumisation, collecte de l'eau de pluie,... Le fait que ce bassin ouvert puisse se trouver au coeur d'un bâtiment 660 permet aussi de produire un effet induit de régulation de température. En cas de besoin, la surface d'eau à l'air libre peut être surmontée d'un caillebotis ou grille de protection 685 pour des raisons de sécurité vis-à-vis des personnes.

La figure 15 montre un mode de réalisation qui peut mettre en oeuvre toutes les variantes déjà décrites, mais qui possède en outre un réseau de canalisations 676 placées dans la superstructure du bâtiment 660. Les canalisations 676 sont alimentées par l'eau des compartiments 668 du réservoir et peuvent servir à toutes les applications où l'utilisation des eaux pluviales est autorisée : arrosage, utilisation comme eau sanitaire dans des toilettes 678, utilisation dans des stations 677 de lavage de voitures ou autres équipements de nettoyage, etc...

La figure 16 montre une variante de réalisation de la figure 15, qui peut également se combiner avec celle-ci. L'eau d'au moins certains des compartiments 668 du réservoir enterré ou semi-enterré sous le bâtiment 660 sert à alimenter des bornes 684 de lutte contre l'incendie et/ou une colonne 681 alimentant un réseau de canalisations 682 réparties sur le toit ou les murs du bâtiment et alimentant des systèmes de pulvérisation 683 prêts à être mis en action en cas d'incendie.

Comme cela a déjà été indiqué plus haut, les différents modes de réalisation décrits peuvent se combiner les uns avec les autres. En particulier, le réservoir enterré ou semi-enterré sous un bâtiment peut servir, en plus de sa fonction première de stockage d'énergie potentielle, à la fois à la réalisation d'un rafraîchissement naturel de l'atmosphère à l'intérieur du bâtiment et à la création d'une source froide pour une installation de chauffage mettant en oeuvre une pompe à chaleur ou à la création d'une source chaude pour une installation de climatisation ou réfrigération à condenseur à eau claire, sans compter les autres utilisations complémentaires énoncées notamment en référence aux figures 14 à 16.

La réalisation d'un réservoir de stockage dans les fondations d'un bâtiment à usage de protection de biens ou de personnes, sans surcoût de génie civil ou avec un surcoût marginal, présente ainsi un véritable effet de synergie, d'autant plus que la présence de ce bassin permettant de stocker de l'énergie hydroélectrique et apte à une optimisation des échanges d'énergie thermique renforce aussi mécaniquement l'ensemble de la structure du bâtiment.

On décrira maintenant, en référence à la représentation schématique de la figure 17, un circuit de commande général 100 qui peut s'appliquer à titre d'exemple aux différents modes de réalisation décrits en référence à la figure 1, mais peut aussi être adapté à d'autres modes de réalisation. Le circuit de commande 100 constitue un dispositif de pilotage des vannes commandées associées aux premiers réservoirs élémentaires 110, 210, 311, 312, 315 et d'une ou plusieurs centrales hydroélectriques 130, 230, 330, 332 en fonction des besoins immédiats en énergie électrique d'appoint et du niveau d'eau dans les premiers réservoirs, mesuré par les capteurs de niveau 180, 280A, 380A, 380B.

Le circuit de commande 100 reçoit les informations L1, L2, L3, L4, L5 des capteurs de niveau 180, 280A, 280B, 380A, 380B respectivement, une information I1 du poste de commande 1 indiquant les besoins en énergie électrique d'appoint, une information I6 indiquant l'énergie solaire disponible à partir d'une ferme solaire 6, une information I7 indiquant l'énergie éolienne disponible à partir d'une ferme éolienne 7, et éventuellement des informations relatives à d'autres types d'énergies renouvelables disponibles pour la production d'électricité, comme par exemple de l'énergie géothermique ou de l'énergie marémotrice.

Le circuit de commande 100 délivre des signaux de commande V150, V250, V350, V352 respectivement aux vannes 150, 250, 350, 352 et des informations de commande U130, U230, U330, U332 aux centrales hydroélectriques 130, 230, 330, 332 existantes, pour un fonctionnement en turbinage ou en pompage selon les circonstances qui expriment soit un besoin en énergie électrique d'appoint dans le réseau de distribution à partir de l'énergie potentielle accumulée, soit un apport d'énergie électrique à partir des énergies renouvelables, ou de façon alternative ou en complément à partir de sources d'énergie classiques en période creuse de consommation, permettant la reconstitution de l'accumulation d'énergie potentielle par pompage.

La commande de la vidange des réservoirs amont 110, 210, 311, 312, 315 par l'ouverture des vannes associées peut être effectuée soit de façon simultanée, mais éventuellement partielle, pour tous les réservoirs, soit de façon successive dans le temps, de façon graduelle, un réservoir amont étant ouvert dès qu'un autre réservoir amont a été vidé.

Le circuit de commande 100 comprend une unité centrale programmée pour ouvrir les différentes électrovannes en fonction des besoins de production d'électricité détectés. Le circuit de commande 100 pilote également le remplissage des réservoirs amont 110, 210, 311, 312 par pompage dans le réservoir aval commun 120 ou le réservoir aval indépendant 220 aux périodes de production électrique excédentaire par le réseau ou par des systèmes locaux, par exemple de type éolien 7 et solaire 6. Le circuit de commande 100 pilote encore le remplissage au moins partiel du réservoir amont 315 par pompage dans le réservoir 312 lorsque celui-ci a déjà été rempli précédemment à partir du réservoir aval 120. Toutefois, le réservoir 315 peut aussi être constitué par un plan d'eau alimenté indépendamment par des eaux de pluie par exemple, et le réservoir 312 pourrait aussi ne servir que de réservoir aval sans être alors relié au réservoir 311 par la conduite 341.

Naturellement l'invention peut présenter diverses variantes et en particulier, les modes de réalisation décrits notamment en référence à la figure 1 peuvent être mis en oeuvre indépendamment les uns des autres en liaison avec divers postes de commande et non nécessairement avec un seul poste de commande centralisé.

## Revendications

1. Installation de production d'énergie électrique d'appoint pour un réseau de distribution de courant électrique, disposée sur un terrain présentant une déclivité définissant une pente naturelle de sol d'au moins 3% et comprenant au moins un premier réservoir d'eau (110 ; 210 ; 311, 312 ;; 411 à 415 ; 511, 512) situé à un premier niveau, un deuxième réservoir d'eau (120 ; 220 ; 311, 312 ; 420 ; 520) situé à un deuxième niveau plus bas que le premier niveau, avec un dénivelé d'au moins 5 mètres, au moins une conduite (140 ; 240 ; 340 ; 342 ; 441, 442 ; 541) de mise en communication entre le premier réservoir (110 ; 210 ; 311, 312 ;; 411 à 415 ; 511, 512) et le deuxième réservoir (120 ; 220 ; 311, 312 ; 420 ; 520) présentant une pente d'au moins 3% et munie d'au moins une vanne commandée (150 ; 250 ; 350 ;; 451 ; 541), une centrale hydroélectrique (130 ; 230 ; 330 ; 332 ; 432 ; 532), une installation de pompage (431 ; 531) et un circuit de commande (460), **caractérisée en ce que** le premier réservoir (110 ; 210 ; 311, 312 ;; 411 à 415 ; 511, 512) situé au niveau du sol présente un volume cumulé compris entre 1000 et 150000 m3 et comprend au moins un réservoir élémentaire qui est intégré de façon enterrée ou semi-enterrée dans les fondations d'un premier bâtiment artificiel (100 ; 200 ; 301, 302, 303) dont la vocation première de la construction n'est pas uniquement celle d'une réserve d'eau, et **en ce que** ledit deuxième réservoir (120 ; 220 ; 311, 312 ; 420 ; 520) est également situé au niveau du sol en utilisant une pente naturelle du sol.

2. Installation selon la revendication 1, **caractérisée en ce qu'**au moins un réservoir élémentaire (210 ; 220 ; 311, 312) qui est intégré de façon enterrée dans les fondations de bâtiments artificiels coopère en outre avec une installation de climatisation (10, 46) ou de réfrigération de tout ou partie desdits bâtiments artificiels (200 ; 300) ou de bâtiments associés, ladite installation de climatisation (10, 46) ou de réfrigération comprenant au moins un condenseur (11) alimenté par l'eau dudit réservoir élémentaire (210 ; 220 ; 311, 312), un détendeur (12), un évaporateur (13) alimenté par un fluide caloporteur et un groupe compresseur (14).

3. Installation selon la revendication 1, **caractérisée en ce qu'**au moins un réservoir élémentaire (210 ; 220 ; 311, 312) qui est intégré de façon enterrée dans les fondations de bâtiments artificiels coopère en outre avec une installation de chauffage (10, 33) de tout ou partie desdits bâtiments artificiels (200 ; 300) ou de bâtiments associés, ladite installation de chauffage (10, 33) comprenant au moins un condenseur (11) alimenté par de l'eau d'un circuit de chauffage, un détendeur (12), un évaporateur (13) alimenté par l'eau dudit réservoir élémentaire (210 ; 220 ; 311, 312) et un groupe compresseur (14).

4. Installation selon l'une quelconque des revendications 1 à 3, **caractérisée en ce que** ledit (120) deuxième réservoir comprend en outre une étendue d'eau naturelle ou artificielle située au niveau du sol en dehors de bâtiments.

5. Installation selon l'une quelconque des revendications 1 à 4, **caractérisée en ce que** ledit dénivelé est compris entre 5 et 8 mètres et la centrale hydroélectrique (532) est située au voisinage dudit premier réservoir (511, 512).

6. Installation selon l'une quelconque des revendications 1 à 4, **caractérisée en ce que** ledit dénivelé est supérieur à 8 mètres et la centrale hydroélectrique et l'installation de pompage sont situées à l'élévation dudit deuxième réservoir (120 ; 220), mais de façon délocalisée par rapport audit deuxième réservoir (120 ; 220).

7. Installation selon l'une quelconque des revendications 1 à 6, **caractérisée en ce que** le circuit de commande (460) comprend une unité (461, 471) de couplage de l'installation de pompage (431) audit réseau de distribution (1) pendant des périodes creuses de consommation d'électricité et une unité (462, 471) de couplage de la centrale hydroélectrique (432) audit réseau de distribution (1) pendant des périodes de pointe de consommation d'électricité.

8. Installation selon l'une quelconque des revendications 1 à 6, **caractérisée en ce que** le circuit de commande (460) comprend une unité (461, 474) de couplage de l'installation de pompage (431) à une source (6A, 7) d'énergie douce naturelle, telle que l'énergie solaire ou l'énergie éolienne, pendant des périodes creuses de consommation d'électricité et une unité (462, 471) de couplage de la centrale hydroélectrique (432) audit réseau de distribution (1) pendant des périodes de pointe de consommation d'électricité.

9. Installation selon l'une quelconque des revendications 1 à 8, **caractérisée en ce que** ledit premier ou deuxième réservoir d'eau intégré de façon enterrée ou semi-enterrée dans les fondations de bâtiments artificiels (100 ; 200 ; 200A ; 300) comprend plusieurs réservoirs élémentaires (311, 312 ; 411 à 415 ; 511, 512) disposés dans des bâtiments distincts (301, 303) et reliés entre eux par une conduite d'équilibrage (341 ; 416 à 419 ; 513).

10. Installation selon l'une quelconque des revendications 1 à 9, **caractérisée en ce que** ledit premier ou deuxième réservoir intégré de façon enterrée ou semi-enterrée dans les fondations de bâtiments artificiels (100 ; 200 ; 200A ; 300) comprend au moins un réservoir élémentaire (668) relié en outre à une installation de rafraîchissement naturel (667 ; 671 à 673), d'arrosage, de nettoyage (677, 678) ou de lutte contre l'incendie (681 à 684).

11. Installation selon l'une quelconque des revendications 1 à 10, **caractérisée en ce qu'**un capteur (180 ; 280A, 280B ; 380A, 380B) de niveau de liquide est associé à chaque réservoir élémentaire (110 ; 210 ; 311, 312) d'un réservoir intégré de façon enterrée ou semi-enterrée dans les fondations de bâtiments artificiels (100 ; 200 ; 200A ; 300)

12. Installation selon l'une quelconque des revendications 1 à 11, **caractérisée en ce que** ledit premier ou deuxième réservoir (110 ; 210 ; 311, 312 ; 411 à 415 ; 511, 512) intégré de façon enterrée ou semi-enterrée dans les fondations de bâtiments artificiels (100 ; 200 ; 200A ; 300) comprend un ou plusieurs réservoirs élémentaires présentant chacun une profondeur enterrée inférieure ou égale à 12m et une portion en superstructure inférieure ou égale à 3m.

13. Installation selon l'une quelconque des revendications 1 à 12, **caractérisée en ce que** ledit premier ou deuxième réservoir (110 ; 210 ; 220 ; 311, 312 ; 411 à 415 ; 511, 512) intégré de façon enterrée ou semi-enterrée dans les fondations de bâtiments artificiels (100 ; 200 ; 200A ; 300) comprend des fondations profondes (661) rendues solidaires d'un cuvelage (665) définissant un réservoir étanche avec un ensemble de compartiments (668) fermés par un plancher (664).

14. Installation selon l'une quelconque des revendications 1 à 13, **caractérisée en ce que** ledit premier ou deuxième réservoir (110 ; 210 ; 220 ; 311, 312 ; 411 à 415 ; 511, 512) intégré de façon enterrée ou semi-enterrée dans les fondations de bâtiments artificiels (100 ; 200 ; 200A ; 300) présente une épaisseur de paroi latérale comprise entre 20 et 45 cm et une épaisseur de fond comprise entre 10 et 25 cm.

15. Installation selon la revendication 1, **caractérisée en ce que** la centrale hydroélectrique (230 ; 330 ; 432 ; 532) a une puissance comprise entre 100 kW et 4 MW.

16. Procédé de production d'énergie électrique d'appoint pour un réseau de distribution de courant électrique, mis en oeuvre sur un terrain présentant une déclivité définissant une pente naturelle de sol d'au moins 3% et comprenant au moins une première étape consistant à utiliser une première source d'énergie électrique pour actionner une installation de pompage (431 ; 531) afin d'assurer le pompage d'eau depuis un deuxième réservoir d'eau (120 ; 220 ; 311, 312 ; 420 ; 520) situé à un deuxième niveau vers un premier réservoir d'eau (110 ; 210 ; 311, 312 ; 411 à 415 ; 511, 512) situé à un premier niveau plus haut que le deuxième niveau avec un dénivelé d'au moins 5 mètres et une pente d'au moins 3%, et une deuxième étape consistant à alimenter une centrale hydroélectrique (130 ; 230 ; 330 ; 332 ; 432 ; 532) à partir dudit premier réservoir d'eau (110 ; 210 ; 311, 312 ; 315 ; 411 à 415 ; 511, 512), **caractérisé en ce qu'**il comprend une étape préliminaire consistant à réaliser au moins ledit premier réservoir d'eau (110 ; 210 ; 311, 312 ;; 411 à 415 ; 511, 512) à partir d'au moins un réservoir élémentaire situé au niveau du sol à la partie inférieure enterrée ou semi-enterrée de bâtiments artificiels (100 ; 200 ; 300) dont la vocation première de la construction n'est pas uniquement celle d'une réserve d'eau, ledit premier réservoir intégré de façon enterrée ou semi-enterrée dans les fondations de bâtiments artificiels (100 ; 200 ; 200A ; 300) présentant un volume cumulé compris entre 1000 et 150000 m3 et ledit deuxième réservoir (120 ; 220 ; 311, 312 ; 420 ; 520) étant également situé au niveau du sol en utilisant une pente naturelle du sol.

17. Procédé selon la revendication 16, **caractérisé en ce que** ledit premier réservoir (110 ; 210 ; 311, 312 ; 411 à 415 ; 511, 512) constitue en outre une source chaude (43) pour une installation de climatisation (10, 46) ou de réfrigération ou une source froide (36) pour une installation de chauffage (10, 33) de tout ou partie desdits bâtiments artificiels (200 ; 300) ou de bâtiments associés, ladite installation de climatisation (10, 46) ou de réfrigération et ladite installation de chauffage (10, 33) comprenant chacune au moins une pompe à chaleur (10).

18. Procédé selon la revendication 16 ou la revendication 17, **caractérisé en ce que** l'on assure le pompage d'eau depuis ledit deuxième réservoir d'eau (120 ; 220 ; 311, 312 ; 420 ; 520) et on assure l'alimentation en eau de la centrale hydroélectrique (130 ; 230 ; 330 ; 332 ; 432 ; 532) à partir dudit premier réservoir d'eau (110 ; 210 ; 311, 312 ; 315 ; 411 à 415 ; 511, 512) au moins partiellement à travers une conduite commune (140 ; 240 ; 340 ; 441, 442 ; 541) à double sens de circulation de fluide.

19. Procédé selon la revendication 16 ou la revendication 17, **caractérisé en ce que** l'on assure le pompage d'eau depuis ledit deuxième réservoir d'eau (120 ; 220 ; 311, 312 ; 420 ; 520), à travers une première conduite (140 ; 240 ; 340 ; 342 ; 441, 442 ; 541) de mise en communication équipée d'au moins une vanne commandée (150 ; 250 ; 350 ; 352 ; 451 ; 541), et on assure l'alimentation en eau de la centrale hydroélectrique (130 ; 230 ; 330 ; 332 ; 432 ; 532) à partir dudit premier réservoir d'eau (110 ; 210 ; 311, 312 ; 315 ; 411 à 415 ; 511, 512), à travers au moins une deuxième conduite (140 ; 240 ; 340 ; 441, 442 ; 541) de mise en communication équipée d'au moins une vanne commandée (150 ; 250 ; 350 ; 352 ; 451 ; 541).

20. Procédé selon l'une quelconque des revendications 16 à 19, **caractérisé en ce que** ledit deuxième réservoir d'eau (220 ; 311, 312 ; 420 ; 520) est situé à la partie inférieure enterrée ou semi-enterrée de bâtiments artificiels (200A; 301, 302, 303) dont la construction est rendue nécessaire par une fonction primaire indépendante d'une fonction secondaire de production d'électricité, et l'énergie électrique produite à partir de la centrale hydroélectrique (230 ; 330 ; 332 ; 432 ; 532) associée audit deuxième réservoir d'eau (220 ; 311, 312 ; 420 ; 520) sert au moins en partie à alimenter localement en énergie électrique un bâtiment artificiel (200A ; 301, 302, 303) à la partie inférieure duquel est situé ledit deuxième réservoir d'eau (220 ; 311, 312 ; 420 ; 520) ou un bâtiment associé (304) situé à proximité immédiate de ce bâtiment artificiel (303).

21. Procédé selon l'une quelconque des revendications 16 à 20, **caractérisé en ce que** la centrale hydroélectrique (230 ; 330 ; 432 ; 532) a une puissance comprise entre 100 kW et 4 MW.

## Patentansprüche

1. Anlage zur Erzeugung von Reserveleistung für ein Stromverteilungsnetz, die auf einem Gelände aufgestellt ist, das eine Abschüssigkeit aufweist, die ein natürliches Bodengefälle von mindestens 3 % definiert, und umfassend mindestens einen ersten Wasserbehälter (110; 210; 311, 312; 411 bis 415; 511, 512), der sich auf einer ersten Höhe befindet, einen zweiten Wasserbehälter (120; 220; 311, 312; 420; 520), der sich auf einer zweiten Höhe unter der ersten Höhe mit einem Niveauunterschied von mindestens 5 Metern befindet, mindestens eine Leitung (140; 240; 340; 342; 441, 442; 541) zur Herstellung einer Verbindung zwischen dem ersten Behälter (110; 210; 311, 312; 411 bis 415; 511, 512) und dem zweiten Behälter (120; 220; 311, 312; 420; 520), die ein Gefälle von mindestens 3 % aufweist und mit mindestens einem gesteuerten Ventil (150; 250; 350; 451; 541) versehen ist, eine Wasserkraftanlage (130; 230; 330; 332; 432; 532), eine Pumpanlage (431; 531) und eine Steuerschaltung (460), **dadurch gekennzeichnet, dass** der erste Behälter (110; 210; 311, 312; 411 bis 415; 511, 512), der sich auf Höhe des Bodens befindet, ein kumuliertes Volumen zwischen 1.000 und 150000 m³ aufweist und mindestens einen elementaren Behälter umfasst, der versenkt oder halb versenkt in die Fundamente eines ersten künstlichen Bauwerks (100; 200; 301, 302, 303) integriert ist, deren Konstruktion als Hauptaufgabe nicht nur jene einer Wasserreserve hat, und dass der zweite Behälter (120; 220; 311, 312; 420; 520) ebenfalls auf der Höhe des Bodens angeordnet ist, wobei ein natürliches Bodengefälle genutzt wird.

2. Anlage nach Anspruch 1, **dadurch gekennzeichnet, dass** mindestens ein elementarer Behälter (210; 220; 311, 312), der versenkt in die Fundamente von künstlichen Bauwerken integriert ist, ferner mit einer Anlage (10, 46) zur Klimatisierung oder Kühlung der Gesamtheit oder eines Teils der künstlichen Bauwerke (200; 300) oder von zugehörigen Bauwerken zusammenwirkt, wobei die Anlage (10, 46) zur Klimatisierung oder Kühlung mindestens einen Kondensator (11), der mit Wasser von dem elementaren Behälter (210; 220; 311, 312) versorgt wird, einen Druckminderer (12), einen Verdampfer (13), der mit einer Wärmeträgerflüssigkeit versorgt wird, und eine Kompressorgruppe (14) umfasst.

3. Anlage nach Anspruch 1, **dadurch gekennzeichnet, dass** mindestens ein elementarer Behälter (210; 220; 311, 312), der versenkt in die Fundamente von künstlichen Bauwerken integriert ist, ferner mit einer Heizanlage (10, 33) der Gesamtheit oder eines Teils der künstlichen Bauwerke (200; 300) oder von zugehörigen Bauwerken zusammenwirkt, wobei die Heizanlage (10, 33) mindestens einen Kondensator (11), der mit dem Wasser eines Heizkreises versorgt wird, einen Druckminderer (12), einen Verdampfer (13), der mit dem Wasser des elementaren Behälters (210; 220; 311, 312) versorgt wird, und eine Kompressorgruppe (14) umfasst.

4. Anlage nach einem der Ansprüche 1 bis 3, **dadurch gekennzeichnet, dass** der zweite Behälter (120) ferner eine natürliche oder künstliche Wasserfläche umfasst, die sich auf Höhe des Bodens außerhalb der Bauwerke befindet.

5. Anlage nach einem der Ansprüche 1 bis 4, **dadurch gekennzeichnet, dass** der Niveauunterschied zwischen 5 und 8 Meter beträgt, und die Wasserkraftanlage (532) in der Nähe des ersten Behälters (511, 512) angeordnet ist.

6. Anlage nach einem der Ansprüche 1 bis 4, **dadurch gekennzeichnet, dass** der Niveauunterschied größer als 8 Meter ist, und die Wasserkraftanlage und die Pumpanlage auf der Höhe des zweiten Behälters (120; 220), aber in Bezug zu dem zweiten Behälter (120; 220) delokalisiert angeordnet sind.

7. Anlage nach einem der Ansprüche 1 bis 6, **dadurch gekennzeichnet, dass** die Steuerschaltung (460) eine Einheit (461, 471) zur Kopplung der Pumpanlage (431) mit dem Verteilungsnetz (1) während schwacher Stromverbrauchszeiten und eine Anlage (462, 471) zur Kopplung der Wasserkraftanlage (432) mit dem Verteilungsnetz (1) während Spitzenstromverbrauchszeiten umfasst.

8. Anlage nach einem der Ansprüche 1 bis 6, **dadurch gekennzeichnet, dass** die Steuerschaltung (460) eine Einheit (461, 474) zur Kopplung der Pumpanlage (431) mit einer natürlichen sanften Energiequelle (6A, 7), wie Sonnenergie oder Windenergie, während schwacher Stromverbrauchszeiten und eine Einheit (462, 471) zur Kopplung der Wasserkraftanlage (432) mit dem Verteilungsnetz (1) während Spitzenstromverbrauchszeiten umfasst.

9. Anlage nach einem der Ansprüche 1 bis 8, **dadurch gekennzeichnet, dass** der erste oder zweite Wasserbehälter, der versenkt oder halb versenkt in die Fundamente von künstlichen Bauwerken (100; 200; 200A, 300) integriert ist, mehrere elementare Behälter (311, 312; 411bis 415; 511, 512) umfasst, die in getrennten Bauwerken (301, 303) angeordnet und miteinander durch eine Ausgleichsleitung (341; 416 bis 419; 513) verbunden sind.

10. Anlage nach einem der Ansprüche 1 bis 9, **dadurch gekennzeichnet, dass** der erste oder zweite Behälter, der versenkt oder halb versenkt in die Fundamente von künstlichen Bauwerken (100; 200; 200A, 300) integriert ist, mindestens einen elementaren Behälter (668) umfasst, der ferner mit einer Anlage zur natürlichen Erfrischung (667; 671 bis 673), zur Bewässerung, zur Reinigung (677, 678) oder zur Brandbekämpfung (681 bis 684) verbunden ist.

11. Anlage nach einem der Ansprüche 1 bis 10, **dadurch gekennzeichnet, dass** ein Füllstandsmesser (180; 280A, 280B; 380A, 380B) jedem elementaren Behälter (110; 210; 311, 312) eines Behälters, der versenkt oder halb versenkt in die Fundamente von künstlichen Bauwerken (100; 200; 200A, 300) integriert ist, zugeordnet ist.

12. Anlage nach einem der Ansprüche 1 bis 11, **dadurch gekennzeichnet, dass** der erste oder zweite Behälter (110; 210; 311, 312; 411 bis 415; 511, 512) der versenkt oder halb versenkt in die Fundamente von künstlichen Bauwerken (100; 200; 200A, 300) integriert ist, einen oder mehrere elementare Behälter umfasst, die jeweils eine versenkte Tiefe kleiner oder gleich 12 m und einen Oberbauabschnitt kleiner oder gleich 3 m aufweisen.

13. Anlage nach einem der Ansprüche 1 bis 12, **dadurch gekennzeichnet, dass** der erste oder zweite Behälter (110; 210; 311, 312; 411 bis 415; 511, 512) der versenkt oder halb versenkt in die Fundamente von künstlichen Bauwerken (100; 200; 200A, 300) integriert ist, tiefe Fundamente (661) umfasst, die mit einer Auskleidung (665) verbunden sind, die einen dichten Behälter mit einer Gesamtheit von durch einen Boden (664) geschlossenen Abteilen (668) definiert.

14. Anlage nach einem der Ansprüche 1 bis 13, **dadurch gekennzeichnet, dass** der erste oder zweite Behälter (110; 210; 311, 312; 411 bis 415; 511, 512) der versenkt oder halb versenkt in die Fundamente von künstlichen Bauwerken (100; 200; 200A, 300) integriert ist, eine Seitenwandstärke zwischen 20 und 45 cm und eine Bodenstärke zwischen 10 und 25 cm aufweist.

15. Anlage nach Anspruch 1, **dadurch gekennzeichnet, dass** die Wasserkraftanlage (230; 330; 432; 532) eine Leistung zwischen 100 kW und 4 MW hat.

16. Verfahren zur Erzeugung von Reserveleistung für ein Stromverteilungsnetz, das auf einem Gelände eingesetzt wird, das eine Abschüssigkeit aufweist, die ein natürliches Bodengefälle von mindestens 3 % definiert, und umfassend mindestens einen ersten Schritt, der darin besteht, eine erste Stromquelle zu verwenden, um eine Pumpanlage (431; 531) zu betätigen, um das Pumpen von Wasser von einem zweiten Wasserbehälter (120; 220; 311, 312; 420; 520), der sich auf einer zweiten Höhe befindet, zu einem ersten Wasserbehälter (110; 210; 311, 312; 411 bis 415; 511, 512), der sich auf einer ersten Höhe über der zweiten Höhe mit einem Niveauunterschied von mindestens 5 Metern und einem Gefälle von mindestens 3 % befindet, und einen zweiten Schritt, der darin besteht, eine Wasserkraftanlage (130; 230; 330; 332; 432; 532) von dem ersten Behälter (110; 210; 311, 312; 315; 411 bis 415; 511, 512) aus zu versorgen, **dadurch gekennzeichnet, dass** es einen vorherigen Schritt umfasst, der darin besteht, mindestens den ersten Wasserbehälter (110; 210; 311, 312; 411 bis 415; 511, 512) von mindestens einem elementaren Behälter aus, der sich auf Höhe des Bodens im unteren versenkten oder halb versenkten Teil von künstlichen Bauwerken (100; 200; 300) befindet, deren Konstruktion als Hauptaufgabe nicht nur jene einer Wasserreserve hat, wobei der erste Behälter, der versenkt oder halb versenkt in die Fundamente von künstlichen Bauwerken (100; 200; 200A; 300) integriert ist, ein kumuliertes Volumen zwischen 1.000 und 150.000 m³ aufweist, und wobei der zweite Behälter (120; 220; 311, 312; 420; 520) ebenfalls auf Höhe des Bodens angeordnet ist, wobei ein natürliches Bodengefälle genutzt wird.

17. Verfahren nach Anspruch 16, **dadurch gekennzeichnet, dass** der erste Behälter (110; 210; 311, 312; 315; 411 bis 415; 511, 512) ferner eine warme Quelle (43) für eine Anlage (10, 46) zur Klimatisierung oder Kühlung oder eine kalte Quelle (36) für eine Anlage (10, 33) zum Heizen der Gesamtheit oder eines Teils der künstlichen Bauwerke (200; 300) oder von zugehörigen Bauwerken bildet, wobei die Klima- oder Kühlanlage (10, 46) und die Heizanlage (10, 33) jeweils mindestens eine Wärmepumpe (10) umfassen.

18. Verfahren nach Anspruch 16 oder Anspruch 17, **dadurch gekennzeichnet, dass** das Pumpen von Wasser von dem zweiten Behälter (120; 220; 311, 312; 420; 520) aus und die Wasserversorgung der Wasserkraftanlage (130; 230; 330; 332; 432; 532) von dem ersten Wasserbehälter (110; 210; 311, 312; 315; 411 bis 415; 511, 512) aus zumindest teilweise durch eine gemeinsame Leitung (140; 240; 340; 441, 442; 541) mit doppelter Flüssigkeitszirkulationsrichtung gewährleistet ist.

19. Verfahren nach Anspruch 16 oder Anspruch 17, **dadurch gekennzeichnet, dass** das Pumpen von Wasser von dem zweiten Behälter (120; 220; 311, 312; 420; 520) aus durch eine erste Verbindungsleitung (140; 240; 340; 342; 441, 442; 541), die mit mindestens einem gesteuerten Ventil (150; 250; 350; 352; 451; 541) versehen ist, und die Wasserversorgung der Wasserkraftanlage (130; 230; 330; 332; 432; 532) von dem ersten Wasserbehälter (110; 210; 311, 312; 315; 411 bis 415; 511, 512) aus durch zumindest eine zweite Verbindungsleitung (140; 240; 340; 441, 442; 541), die mit mindestens einem gesteuerten Ventil (150; 250; 350; 352; 451; 541) versehen ist, gewährleistet ist.

20. Verfahren nach einem der Ansprüche 16 bis 19, **dadurch gekennzeichnet, dass** der zweite Wasserbehälter (220; 311, 312; 420; 520) im unteren versenkten oder halb versenkten Teil von künstlichen Bauwerken (200A; 301, 302, 303) angeordnet ist, deren Konstruktion durch eine Primärfunktion unabhängig von einer Sekundärfunktion der Stromerzeugung notwendig wird, und dass der Strom, der von der Wasserkraftanlage (230; 330; 332; 432; 532), die dem zweiten Wasserbehälter (220; 311, 312; 420; 520) zugeordnet ist, erzeugt wird, zumindest teilweise dazu dient, ein künstliches Bauwerk (200A; 301, 302, 303), in dessen unterem Teil sich der zweite Wasserbehälter (220; 311, 312; 420; 520) befindet, oder ein zugehöriges Bauwerk (304), das sich in unmittelbarer Nähe dieses künstlichen Bauwerks (303) befindet, lokal mit Strom zu versorgen.

21. Verfahren nach einem der Ansprüche 16 bis 20, **dadurch gekennzeichnet, dass** die Wasserkraftanlage (230; 330; 432; 532) eine Leistung zwischen 100 kW und 4 MW hat.

## Claims

1. An installation for producing supplementary electrical energy for an electricity network, including at least first and second water reservoirs, the first water reservoir (110; 210; 311, 312; 411 to 415; 511, 512) being situated at a first level and the second water reservoir (120; 220; 311, 312; 420; 520) being situated at a second level lower than the first level with a level difference of at least 5 meters, at least one communicating pipe (140; 240; 340; 342; 441, 442; 541) between the first water reservoir (110; 210; 311, 312; 411 to 415; 511, 512) and the second water reservoir (120; 220; 311, 312; 420; 520) having a slope of at least 3% and being provided with at least one remote-controlled valve (150; 250; 350; 451; 541), a hydro-electric generating system (130; 230; 330; 332; 432; 532), a pumping installation (431; 531), and a control circuit (460), the installation being **characterized in that** the first water reservoir (110; 210; 311, 312; 411 to 415; 511, 512) situated at ground level has a cumulative volume in the range 1000 m³ to 150 000 m³ and comprises at least one individual reservoir that is integrated in underground or semi-underground manner in the foundations of a first artificial building (200; 301, 302, 303) whose first vocation of construction is not only a water reserve, and **in that** the second water reservoir (120; 220, 311; 312; 420, 520) is also situated at ground level using a natural slope of the ground.

2. An installation according to claim 1, **characterized in that** at least one individual reservoir that is (210; 220; 311; 312) integrated in underground manner in the foundations of artificial buildings also cooperates with an air-conditioning installation (10, 46) or refrigeration installation for some or all of said artificial buildings (200; 300) or associated buildings, said air-conditioning installation (10, 46) or said refrigeration installation including at least one condenser (11) fed with water from said individual reservoir (210; 220; 311; 312), an expander (12), an evaporator (13) fed with a heat-exchange fluid, and a compressor unit (14).

3. An installation according to claim 1, **characterized in that** at least one individual reservoir (210; 220; 311; 312) that is integrated in underground manner in the foundations of artificial buildings also cooperates with an installation (10, 33) for heating some or all of said artificial buildings (200; 300) or associated buildings, said heating installation (10, 33) including at least one condenser (11) fed with water from a heating circuit, an expander (12), an evaporator (13) fed with water from said individual reservoir (210; 220; 311; 312), and a compressor unit (14).

4. An installation according to any one of claims 1 to 3, **characterized in that** said (120) second water reservoir further comprises a natural or artificial body of water situated at ground level outside buildings.

5. An installation according to any one of claims 1 to 4, **characterized in that** said difference in level lies in the range 5 meters to 8 meters and the hydro-electric generating system (532) is situated in the vicinity of said first water reservoir (511, 512).

6. An installation according to any one of claims 1 to 4, **characterized in that** said difference in level is greater than 8 meters and the hydro-electric generating system and the pumping installation are situated at the elevation of said second water reservoir (120; 220), but away from said second water reservoir (120; 220).

7. An installation according to any one of claims 1 to 6, **characterized in that** the control circuit (460) includes a unit (461, 471) for coupling the pumping installation (431) to said distribution network (1) during periods of low electricity consumption and a unit (462, 471) for coupling the hydro-electric generating system (432) to said distribution network (1) during periods of peak electricity consumption.

8. An installation according to any one of claims 1 to 6, **characterized in that** the control circuit (460) includes a unit (461, 474) for coupling the pumping installation (431) to a source (6A, 7) of environmentally friendly natural energy, such as solar energy or wind energy, during periods of low electricity consumption, and a unit (462, 471) for coupling the hydro-electric generating system (432) to said distribution network (1) during periods of peak electricity consumption.

9. An installation according to any one of claims 1 to 8, **characterized in that** said first or second water reservoir integrated in underground or semi-underground manner in the foundations of artificial buildings (100; 200; 200A; 300) includes a plurality of individual reservoirs (311, 312; 411 to 415; 511, 512) disposed in separate buildings (301, 303) and interconnected by a balancing pipe (341; 416 to 419; 513).

10. An installation according to any one of claims 1 to 9, **characterized in that** said first or second water reservoir integrated in underground or semi-underground manner in the foundations of artificial buildings (100; 200; 200A; 300) includes at least one individual reservoir (668) also connected to a natural cooling (667; 671 to 673), sprinkler, cleaning (677, 678), or firefighting (681 to 684) installation.

11. An installation according to any one of claims 1 to 10, **characterized in that** a liquid level sensor (180; 280A, 280B; 380A, 380B) is associated with each individual reservoir (110, 210, 311, 312) of a water reservoir integrated in underground or semi-underground manner in the foundations of artificial buildings (100; 200; 200A; 300).

12. An installation according to any one of claims 1 to 11, **characterized in that** said first or second water reservoir (110; 210; 311, 312; 411 to 415; 511, 512) integrated in underground or semi-underground manner in the foundations of artificial buildings (100; 200; 200A; 300) includes one or more individual reservoirs each having an underground depth less than or equal to 12 m and a superstructure portion with a height less than or equal to 3 m.

13. An installation according to any one of claims 1 to 12, **characterized in that** said first or second water reservoir (110; 210; 220; 311, 312; 411 to 415; 511, 512) integrated in underground or semi-underground manner in the foundations of artificial buildings (100; 200; 200A; 300) includes deep foundations (661) attached to tanking (665) defining a watertight water reservoir with a set of compartments (668) closed by a floor (664).

14. An installation according to any one of claims 1 to 13, **characterized in that** said first or second water reservoir (110; 210; 220; 311, 312; 411 to 415; 511, 512) integrated in underground or semi-underground manner in the foundations of artificial buildings (100; 200; 200A; 300) has a lateral wall thickness in the range 20 cm to 45 cm and a bottom thickness in the range 10 cm to 25 cm.

15. An installation according to claim 1, **characterized in that** the hydro-electric generator system (230; 330; 432; 532) has a power rating in the range 100 KW and 4 MW.

16. A method of producing supplementary electrical energy for an electricity network, the method including at least a first step of using a first source of electrical energy to drive a pumping installation (431; 531) in order to pump water from a second water reservoir (120; 220; 311, 312, 420; 520) situated at a second level to a first water reservoir (110; 210; 311, 312; 411 to 415; 511, 512) situated at a first level higher than the second level with a level difference of at least 5 meters and a slope of at least 3%, and a second step of feeding a hydro-electric generating system (130; 230; 330; 332; 432; 532) from said first water reservoir (110; 210; 311, 312; 315; 411 to 415; 511, 512), the method being **characterized in that** it includes a preliminary step of providing at least said first water reservoir (110; 210; 311, 312; 411 to 415; 511, 512) from at least one individual reservoir situated at ground level in the underground or semi-underground lower portion of artificial buildings (100; 200; 300) whose first vocation of construction is not only a water reserve, said first reservoir integrated in underground or semi-underground manner in the foundations of artificial buildings (100; 200; 200A; 300) having a cumulative volume in the range 1000 m³ to 150,000 m³ and said second water reservoir (120; 220; 311; 312; 420; 520) is also situated at ground level using a natural slope of the ground.

17. A method according to claim 16, **characterized in that** said first water reservoir (110; 210; 311, 312; 411 to 415; 511, 512) further constitutes a hot source (43) for an air-conditioning installation (10, 46) or a refrigeration installation or a cold source (36) for an installation (10, 33) for heating some or all of said artificial buildings (200; 300) or associated buildings, said air-conditioning installation (10, 46) or said refrigeration installation and said heating installation (10, 33) each including at least one heat pump (10).

18. A method according to claim 16 or claim 17, **characterized in that** water is pumped from said second water reservoir (120; 220; 311, 312; 420; 520) and the hydro-electric generating system (130; 230; 330; 332; 432; 532) is fed with water from said first water reservoir (110; 210; 311, 312; 315; 411 to 415; 511, 512) at least partially via a common pipe (140; 240; 340; 441, 442; 541) with two-way flow of fluid.

19. A method according to claim 16 or claim 17, **characterized in that** water is pumped from said second water reservoir (120; 220; 311, 312; 420; 520) via a first communicating pipe (140; 240; 340; 342; 441, 442; 541) equipped with at least one remote-controlled valve (150; 250; 350; 352; 451; 541) and the hydro-electric generating system (130; 230; 330; 332; 432; 532) is fed with water from said first water reservoir (110; 210; 311, 312; 315; 411 to 415; 511, 512) via at least one second communicating pipe (140; 240; 340; 441, 442; 541) equipped with at least one remote-controlled valve (150; 250; 350; 352; 451; 541).

20. A method according to any one of claims 16 to 19, **characterized in that** said second water reservoir (220; 311; 312; 420; 450) is situated in the underground or semi-underground lower portion of artificial buildings (200A; 301; 302, 303) that need to be built for a primary function independently of a secondary function of producing electricity, and the electrical energy produced by the hydro-electric generator system (230; 330; 332; 432; 532) associated with said second water reservoir (220; 311, 312; 420; 520) is used at least in part for the local supply of electrical energy to artificial buildings (200A; 301, 302, 303) in the lower portion of which said second water reservoir (220; 311, 312; 420; 520) is situated or an associated building (304) situated in the immediate vicinity of that artificial building (303).

21. A method according to any one of claims 16 to 20, **characterized in that** the hydro-electric generator system (230; 330; 432; 532) has a power rating in the range 100 KW and 4 MW.
